# FASCICULE DE BREVET EUROPEEN

(11) **EP 3 480 943 B1**
(45) Date de publication et mention de la délivrance du brevet: **03.06.2020**
(21) Numéro de dépôt: 18203451.2
(22) Date de dépôt: 30.10.2018
(51) Int. Cl.: H02S 20/30, H02S 20/26

(54) **SYSTEME DE COLLECTE D'ENERGIE SOLAIRE**
SONNENENERGIEKOLLEKTORSYSTEM
SYSTEM FOR COLLECTING SOLAR ENERGY

(30) Priorité: 30.10.2017 FR 1760217
(43) Date de publication de la demande: 08.05.2019
(73) Titulaire: Commissariat à l'Energie Atomique et aux Energies Alternatives, 75015 Paris (FR)
(72) Inventeur: THONY, Philippe, 38380 ENTRE-DEUX-GUIERS (FR); BIANCO, Lorenza, 10126 TORINO (IT); VEGA DE SEOANE, José-Maria, 73370 LE BOURGET DU LAC (FR)
(74) Mandataire: Hautier, Nicolas

(56) Documents cités:
- EP-A2- 2 199 528
- WO-A1-2012/119604
- FR-A1- 3 019 883
- US-A1- 2005 102 934

## Description

### DOMAINE TECHNIQUE DE L'INVENTION

La présente invention concerne le domaine de la collecte d'énergie solaire en général, et plus particulièrement le domaine des solutions de collecte de l'énergie solaire parvenant sur des infrastructures telles que des bâtiments.

Elle trouvera pour application avantageuse les bâtiments ou autres infrastructures intelligents exploitant efficacement l'énergie solaire.

### ETAT DE LA TECHNIQUE

Les bâtiments intelligents et en particulier les bâtiments à énergie positive ont vocation à jouer un rôle majeur dans la réduction des émissions de gaz à effet de serre.

Dans ce contexte, il existe un besoin portant sur des dispositifs de collecte d'énergie solaire permettant d'une part de collecter efficacement l'énergie solaire parvenant sur un bâtiment et d'autre part de réduire la consommation d'énergie nécessaire à la régulation de la température à l'intérieur du bâtiment.

On connait par exemple les solutions présentées dans les documents WO2012/119604A1, EP2199528A2, US2005/102934 ou encore FR3019883A1.

Ce besoin est d'autant plus important dans les bâtiments tertiaires modernes qui présentent une enveloppe externe formée essentiellement de surfaces vitrées. En effet, les surfaces vitrées de ces bâtiments laissent le rayonnement solaire pénétrer à l'intérieur des bâtiments ce qui provoque, même en automne et en hiver, une augmentation trop importante de la température interne. Cela génère habituellement une consommation excessive d'électricité puisqu'il faut refroidir par climatisation la température même pendant des périodes de l'année où la température extérieure est agréable.

Certaines des solutions développées prévoient des panneaux photovoltaïques fixés sur les surfaces vitrées de bâtiment, l'espacement entre deux panneaux photovoltaïques permettant le passage de lumière à l'intérieur du bâtiment. Ces solutions conduisent à une efficacité énergétique faible et conduisent également, à certaines périodes de l'année, à peu de confort à l'intérieur du bâtiment, que ce soit en termes de luminosité ou de température.

Il demeure donc un besoin consistant à proposer une solution permettant d'augmenter l'efficacité énergétique des infrastructures telles que des bâtiments équipés de panneaux photovoltaïques, de préférence sans pour autant dégrader trop fortement le confort à l'intérieur de ces infrastructures.

### RESUME DE L'INVENTION

La présente invention concerne un système de collecte de l'énergie solaire, de préférence apte à être disposé en regard d'au moins un élément vitré, comprenant une pluralité de modules de collecte adjacents deux à deux, chaque module de collecte comprenant au moins une première face et une deuxième face, opposée à la première face. Chacune des première et deuxième faces comprenant :
- au moins une zone de conversion comprenant une pluralité de cellules photovoltaïques et
- au moins une zone de réflexion configurée pour réfléchir une partie des rayons solaires incidents.

Le système comprend au moins un dispositif de couplage configuré pour piloter la position des modules de collecte de sorte que :
- dans une première position relative des modules de collecte :
   ∘ des rayons solaires incidents arrivant sur la zone de réflexion de la première face d'un module de collecte donné parmi la pluralité de modules de collecte :
      ▪ sont en partie au moins réfléchis en direction de la zone de conversion de la deuxième face d'un module de collecte adjacent audit module de collecte donné et
      ▪ traversent en partie ledit module de collecte donné,
   ∘ des rayons solaires incidents arrivent sur la zone de conversion de la première face dudit module de collecte donné.

Par ailleurs, dans une deuxième position des modules de collecte :
∘ des rayons solaires incidents arrivant sur la zone de réflexion de la deuxième face dudit module de collecte adjacent:
   ▪ sont en partie au moins réfléchis en direction de la zone de conversion de la première face dudit module de collecte donné, et
   ▪ traversent en partie ledit module de collecte adjacent,
∘ des rayons solaires incidents arrivent sur la zone de conversion de la deuxième face dudit module de collecte adjacent.

Ainsi, les rayons arrivant sur la face d'un module :
∘ sont pour partie absorbés par les cellules photovoltaïques de cette face,
∘ traversent pour partie le module, par exemple pour illuminer l'intérieur de l'infrastructure équipée du système de collecte selon l'invention,
∘ sont pour partie réfléchis vers les cellules photovoltaïques portées par la face d'un module adjacent.

Ainsi, la présente invention permet la collecte d'énergie solaire tout en laissant passer une partie des rayons solaires au travers du système de collecte.

Cela permet de manière avantageuse de conserver par exemple un éclairage à l'intérieur d'un bâtiment tout en disposant de systèmes de collecte et de conversion d'énergie solaire disposés au niveau d'éléments vitrés.

De même, dans le cas d'un système biologique comme un jardin, une serre, la régulation de la lumière solaire par le système de collecte assure d'une part la conversion d'une partie de l'énergie solaire et d'autre part la régulation de l'éclairage solaire de la surface végétale par exemple.

De manière avantageuse, la surface de collecte d'énergie solaire peut ne pas être inférieure à celle d'un système conventionnel ne permettant pas le passage de la lumière. En effet, c'est en partie la disposition astucieuse des cellules photovoltaïques les unes par rapport aux autres et des surfaces réfléchissantes qui permet à la présente invention de collecter de l'énergie solaire sur une surface égale, voire supérieure à celle occupée par le système lui-même et cela tout en permettant le passage de rayons solaires au travers dudit système de collecte.

De manière particulièrement astucieuse, la présente invention tire parti d'un « jeu de miroirs », c'est-à-dire d'une disposition de surfaces réfléchissantes et de modules équipés sur leurs deux faces de cellules photovoltaïques afin de collecter de l'énergie solaire directement via des rayons solaires incidents et indirectement via des rayons solaires réfléchis.

En ce sens, le système selon l'invention se différencie des systèmes conventionnels de suivi de la course du Soleil puisque ces derniers sont configurés pour, en permanence, orienter les cellules photovoltaïques de manière à ce que l'angle d'incidence formé par les rayons solaires incidents et la normale aux modules soit nul (0 degrés). Au contraire, l'invention prévoit quant à elle d'orienter les modules portant les cellules photovoltaïques pour que l'angle d'incidence soit non nul, au moins pendant une partie de la journée. Ce décalage angulaire par rapport à la normale aux modules est choisi de manière à ce qu'une partie au moins des rayons solaires soit réfléchie depuis une zone de réflexion d'un module en direction de la zone de conversion d'un module adjacent.

La présente invention permet d'améliorer les conditions de confort visuel et thermique et de réguler efficacement la température à l'intérieur d'une pièce exposée au soleil via la régulation du flux de rayons solaires passant au travers du système de collecte et pénétrant dans la pièce.

Ainsi, en effectuant un suivi de la position du soleil dans le ciel et en positionnant de manière astucieuse chaque module de collecte d'une part les uns relativement aux autres et d'autre part par rapport à la position du soleil, la présente invention peut en outre collecter efficacement de l'énergie solaire tout en étant traversée par des rayons solaires incidents.

Par conséquent, l'invention propose une solution particulièrement pertinente pour augmenter l'efficacité énergétique des infrastructures telles que des bâtiments équipés de modules photovoltaïques, ceci sans pour autant dégrader, voire en améliorant, le confort (température intérieure et luminosité) à l'intérieur de ces infrastructures lorsqu'elles sont équipées de surfaces vitrées, tout en préservant pour l'occupant la vue sur l'extérieur.

De manière particulièrement astucieuse, la présente invention est configurée pour être adaptable à des structures déjà existantes comme des bâtiments, et cela sans besoin d'effectuer de lourds travaux autre que l'installation du système de collecte. L'invention s'inscrit donc parfaitement dans un contexte de rénovation. Le système selon l'invention peut également être fixé sur des structures telles par exemple qu'un abri pour des personnes attendant le bus ou tout autre transport en commun, ou qu'un parking pour voitures ou cycles par exemple.

Par ailleurs, le système de collecte peut être fixé sur un toit d'un bâtiment, de préférence sur un toit dit « froid » (habituellement désigné par le vocable anglais « cool roof »), c'est-à-dire un toit présentant un revêtement à très forte réflectivité relativement aux rayons solaires incidents. Associée aux toits froids, la réflexion générée par le toit redirige une partie du rayonnement incident sur les zones de conversion ce qui augmente encore le rendement énergétique.

La solution selon l'invention présente des avantages considérables par rapport à d'autres solutions qui auraient été basées sur l'utilisation conjointe :
- d'un module de collecte, fixé de manière immobile sur une paroi vitrée, présentant une face avant et une face arrière comprenant chacune des cellules photovoltaïques et des zones transparentes,
- d'un réflecteur, présentant des zones transparentes et des zones de réflexion, le réflecteur étant disposé entre une face arrière du module de collecte et une paroi vitrée de manière à laisser passer une partie du flux lumineux au travers des zones transparentes du module de collecte et à réfléchir vers la face arrière du module de collecte une autre partie du flux lumineux.

Avec ce type de solution, l'efficacité énergétique serait faible. Par ailleurs, ce type de système basé sur des modules de collecte fixes ne permet pas de réguler finement et selon une grande amplitude le rayonnement lumineux pénétrant au travers de la paroi vitrée du bâtiment. En particulier, il n'est pas possible de supprimer l'ombrage imposé par le module de collecte d'une part et par le réflecteur d'autre part.

De plus, le rayonnement pénétrant au travers de la paroi vitrée du bâtiment est nécessairement filtré par deux modules (le module de collecte et le réflecteur) avant d'atteindre la paroi vitrée.

Enfin, l'immobilité de ce système de collecte relativement à la course du Soleil dans le ciel est une limitation importante à son rendement énergétique.

En outre, la solution selon l'invention présente des avantages considérables par rapport à d'autres solutions qui auraient été basées sur l'utilisation conjointe :
- d'un module de collecte, fixé de manière immobile au niveau de la partie basse d'une paroi vitrée et sur la partie intérieure de ladite paroi vitrée, présentant une face avant et une face arrière comprenant chacune des cellules photovoltaïques,
- d'un réflecteur situé en regard et à l'arrière du module de collecte relativement au Soleil.

Le réflecteur ainsi disposé réfléchirait les rayons solaires incidents vers la face arrière du module de collecte. La face avant elle, recevrait les rayons solaires incidents au travers d'une partie de la paroi vitrée.

Une telle solution présenterait des inconvénients par rapport à la solution de la présente invention.

D'une part, ce système ne permettrait pas de disposer d'un ombrage efficace relativement à l'éclairement d'une pièce.

D'autre part, la position du module de collecte au niveau de la partie intérieure de la paroi vitrée impliquerait que les rayons solaires incidents doivent d'abord traverser la partie extérieure de la paroi vitrée, réduisant ainsi la quantité et l'intensité de rayons solaires incidents parvenant au module de collecte. En effet, une partie des rayons solaires incidents serait réfléchie et une autre serait absorbée avant d'atteindre le module de collecte.

Ainsi, avec ce type de solution, l'efficacité énergétique resterait faible et il ne serait pas possible en plus de réguler le rayonnement lumineux pénétrant au travers de la paroi vitrée du bâtiment.

Enfin, l'immobilité de ce système de collecte reste une limitation très forte relativement à son rendement énergétique.

L'invention est ainsi bien plus performante que ces éventuelles solutions en termes d'efficacité énergétique et aussi en termes de confort.

La présente invention concerne aussi un ensemble comprenant au moins un système de collecte d'énergie solaire selon la présente invention et comprenant au moins un élément d'une infrastructure, l'élément étant pris parmi : une paroi vitrée, un toit, un abri, par exemple pour une personne attendant un véhicule de transport en commun, un abri pour parking de cycles ou de voitures. Le système de collecte est disposé sur ou en regard dudit élément de l'infrastructure.

Ainsi, l'ensemble est configuré de manière à ce que l'élément de l'infrastructure et le soleil soient disposés de part et d'autre du système de collecte.

La présente invention concerne également un bâtiment comprenant au moins un système de collecte d'énergie solaire selon la présente invention et comprenant au moins une paroi vitrée, le système de collecte étant disposé sur ou en regard de la paroi vitrée.

De préférence, le système de collecte est disposé à l'extérieur d'une enveloppe du bâtiment, l'enveloppe portant la paroi vitrée.

La présente invention concerne aussi un procédé de pilotage d'un système de collecte selon la présente invention et comprenant la séquence d'étapes comprenant au moins les étapes suivantes :
a. Recevoir au moins un paramètre variable dans le temps ;
b. Ajuster l'orientation des modules de collecte en fonction au moins dudit paramètre.
   La séquence d'étapes a et b étant répétée dans le temps.

De manière optionnelle, l'orientation des modules de collecte est ajustée en fonction au moins dudit paramètre et d'une consigne prioritaire. La consigne prioritaire est basée sur au moins l'un parmi: une énergie électrique produite par les zones de conversion, une température à l'intérieur d'une infrastructure sur laquelle est disposée le système de collecte, un flux lumineux traversant le système de collecte. Dans ce dernier cas il peut s'agir de la luminosité reçue par une pièce vitrée située à l'arrière du système de collecte ou reçue par une autre surface, par exemple végétalisée, située à l'arrière du système de collecte relativement à la direction des rayons incidents.

Avantageusement, l'au moins un paramètre variable dans le temps comprend au moins un paramètre pris parmi :
∘ la date et l'heure,
∘ une température à l'intérieur d'une infrastructure, telle qu'un bâtiment, sur laquelle le système de collecte est fixé,
∘ une température extérieure,
∘ une intensité lumineuse extérieure, de préférence reçue par le système de collecte ou à proximité du système de collecte,
∘ une intensité lumineuse à l'intérieure d'une infrastructure telle qu'un bâtiment, sur laquelle le système de collecte est fixé,
∘ l'inclinaison des rayons solaires incidents par rapport au système de collecte,
∘ un paramètre météorologique pris parmi : la vitesse du vent, la direction du vent, la présence de pluie,
∘ une orientation géographique du système de collecte,
∘ une inclinaison du système de collecte relativement à l'horizon.

Avantageusement, l'orientation de chaque module de collecte relativement à la position du soleil est déterminée par un angle formé par la deuxième face de chaque module de collecte et une surface de l'infrastructure équipée du système de collecte.

### BREVE DESCRIPTION DES FIGURES

Les buts, objets, ainsi que les caractéristiques et avantages de l'invention ressortiront mieux de la description détaillée de modes de réalisation de cette dernière qui sont illustrés par les dessins d'accompagnement suivants dans lesquels :
- La figure 1 illustre un bâtiment comprenant une pluralité d'éléments vitrés dont un étant équipé d'un système de collecte d'énergie solaire selon un mode de réalisation de la présente invention, le système comprenant dans cet exemple trois modules de collecte.
- La figure 2 illustre une vue du dessus d'un système de collecte d'énergie solaire selon un mode de réalisation de la présente invention.
- La figure 2a illustre selon un mode de réalisation une vue du dessus d'un système de collecte d'énergie solaire et en particulier un exemple de dynamique d'ajustement de la configuration de deux modules de collecte.
- La figure 3 illustre une vue du dessus d'un module de collecte d'énergie solaire selon un mode de réalisation de la présente invention.
- La figure 4 illustre une vue de face de trois modules de collecte d'énergie solaire selon un autre mode de réalisation de la présente invention.
- Les figures 5a à 5e illustrent différentes configurations prises par le système de collecte d'énergie solaire au cours d'une journée selon un mode de réalisation de la présente invention.
- La figure 6 illustre quelques étapes d'un exemple d'algorithme de pilotage de la position des modules de collecte relativement aux rayons du soleil.
- La figure 7 est un graphique représentant les différences de rendement entre un système de collecte d'énergie solaire de l'art antérieur et un système de collecte selon un mode de réalisation de la présente invention, ceci en fonction des heures de la journée et en fonction de la période de l'année.

Les dessins joints sont donnés à titre d'exemple et ne sont pas limitatifs de l'invention. Ces dessins sont des représentations schématiques et ne sont pas nécessairement à l'échelle de l'application pratique. En particulier les différentes épaisseurs des couches, films et cellules photovoltaïques ne sont pas représentatives de la réalité.

### DESCRIPTION DETAILLEE DE L'INVENTION

Dans le cadre de la présente invention, on entend par « zone de réflexion » une zone dont la matière présente un coefficient de réflexion de la lumière solaire supérieure à 8%, de préférence à 15% et avantageusement à 20%.

On parlera de lumière visible, c'est-à-dire perçue par l'œil humain, utile en particulier pour le confort visuel ou de lumière solaire, c'est-à-dire perçue par le système de collecte de l'énergie solaire. En général, le spectre perçu par le système de collecte de l'énergie solaire est plus large (300nm-1100nm) que le spectre perçu par l'œil humain (350nm-750nm). On notera également que le soleil émet de la lumière jusqu'à plus de 4000nm, la fin du spectre dans le domaine infra-rouge étant principalement porteur de chaleur.

De préférence, pour un rayonnement solaire incident, parvenant sur une zone de réflexion avec un angle compris entre 0 et 90 degrés par rapport à la normale à cette zone de réflexion, au moins X% du rayonnement parvenant sur cette zone est réfléchi, X étant ≥ 20, de préférence X ≥ 50.

Selon un mode de réalisation, X ≤ 70%. Ce mode de réalisation permet d'avoir une partie de rayonnement solaire qui est réfléchie et une autre partie qui traverse le module pour parvenir sur l'infrastructure portant le système. Si l'infrastructure présente des surfaces vitrées, ce rayonnement traversant le module peut ainsi contribuer à l'illumination l'intérieur de l'infrastructure.

Dans le cadre de la présente invention, on entend par « élément transparent » un élément dont la matière présente un coefficient de transmittance du spectre visible ≥ 80%. De préférence, pour un rayonnement solaire incident, parvenant sur un élément transparent avec un angle compris entre 0 et 90 degrés par rapport à la normale à cette zone de réflexion, au moins Y% du rayonnement parvenant sur cet élément transparent traverse ledit élément transparent, Y étant ≥ 20, de préférence Y ≥ 50.

Dans le cadre de la présente invention, on entend par « élément absorbant » un élément dont la matière présente un coefficient d'absorption ≥ 50%, de préférence pour de la lumière blanche. De préférence, pour un rayonnement solaire incident, parvenant sur un élément absorbant avec un angle compris entre 0 et 90 degrés par rapport à la normale à cet élément absorbant, au moins Z% du rayonnement parvenant sur cette zone est absorbé par l'élément absorbant, Z étant ≥ 20, de préférence Z ≥ 50.

Dans le cadre de la présente invention, on entend par « zone de conversion » une zone qui présente pour fonction de convertir un flux lumineux en électricité par phénomène photovoltaïque.

Dans le cadre de la présente invention, on entend par « rayons incidents» parvenant sur une surface « S » des rayons lumineux, de préférence des rayons solaires, parvenant sur ladite surface S, sans avoir au préalable été réfléchi par un élément du système de collecte. Il s'agit typiquement d'un rayonnement direct parvenant de la source lumineuse, telle que le soleil. En particulier lorsque l'on indiquera que les rayons incidents parviennent sur une face d'un module selon un angle particulier, on considérera que ces rayons proviennent de la source lumineuse sans avoir au préalable été réfléchis par un élément du système de collecte.

Alternativement, il peut s'agir de rayons provenant d'une source lumineuse, et parvenant sur la surface S après réflexion sur une autre surface n'appartenant pas au système de collecte. Cette autre surface est par exemple le sol. Dans cette situation, les règles de pilotage du système de collecte d'énergie pourront être adaptées en conséquence, et particulièrement en considérant une pluralité de rayons lumineux diffus incidents en lieux et place des rayons solaires incidents.

Dans la présente invention, on entend par « configuration du système de collecte » ou encore « configuration des modules de collecte » ou également « configuration angulaire » la disposition des modules de collecte les uns relativement aux autres et relativement à la surface de l'élément portant les modules, c'est-à-dire l'angle formé entre la normale de la surface de l'élément portant le système de collecte et le plan médian définit par chaque module de collecte. Dans le cas non limitatif où l'infrastructure qui porte le système de collecte est un bâtiment, ladite surface est la façade ou la pente du toit recevant le système.

Avant d'entamer une revue détaillée de modes de réalisation de l'invention, sont énoncées ci-après des caractéristiques optionnelles qui peuvent éventuellement être utilisées en association ou alternativement :
- Avantageusement, chaque module de collecte définit un plan médian sensiblement parallèle à la première face et à la deuxième face et les modules de collecte sont disposés les uns relativement aux autres de sorte à ce que leurs plans médians soient parallèles.
   Cela permet que lorsque des rayons solaires incidents entrent en contact avec les zones de réflexion, ces rayons solaires soient réfléchis en direction des cellules photovoltaïques du module de collecte adjacent au module de collecte considéré.
- Avantageusement, chaque module de collecte présente une dimension principale d'extension et les modules de collecte sont disposés les uns relativement aux autres de sorte à ce que leurs dimensions principales d'extension soient parallèles.
- Avantageusement, la zone de conversion de la première face et la zone de conversion de la deuxième face sont comprises entre un premier élément transparent relativement aux rayons solaires et un deuxième élément transparent relativement aux rayons solaires.
   Cela permet de protéger les cellules photovoltaïques de l'environnement extérieur.
- Avantageusement, chaque module de collecte présente une dimension principale d'extension, les cellules photovoltaïques de la première et de la deuxième pluralité de cellules photovoltaïques étant respectivement alignées les unes relativement aux autres selon la direction principale d'extension de chaque module de collecte.
- Avantageusement, une pluralité de cellules photovoltaïques bifaciales forme à la fois la zone de conversion de la première face et à la fois la zone de conversion de la deuxième face d'au moins un module parmi la pluralité de modules de collecte.
   Ainsi, une couche de cellules photovoltaïques bifaciales permet de recevoir des rayons lumineux à partir des deux faces du module.
   Cela permet de rendre plus compact les modules de collecte. Cela permet également de réaliser les modules de collecte de manière simple et ne nécessitant pas un ajustement particulier des positions relatives des zones de conversion situées sur deux faces opposées du module, ceci afin qu'il y ait un recouvrement parfait des zones de conversion.
   Le mode de réalisation intégrant des cellules photovoltaïques bifaciales est uniquement optionnel. En effet, selon un mode de réalisation alternatif, la zone de conversion de la première face et la zone de conversion de la deuxième face comprennent des cellules photovoltaïques mono-face et sont disposées à distance l'une de l'autre, de préférence en regard l'une de l'autre (faces arrières contre face arrières) et de part et d'autre du plan médian de chaque module de collecte.
   Cela permet de collecter de l'énergie solaire au niveau de chaque face des modules de collecte tout en utilisant des cellules photovoltaïques mono-faces, c'est-à-dire de cellules photovoltaïques conventionnelles. Il permet donc de réduire les coûts de revient du système de collecte.
   Ainsi, les cellules photovoltaïques d'une face recouvrent les cellules photovoltaïques de l'autre face et inversement. Cela permet d'éviter que des zones du module ne servent ni à l'absorption des photons ni à la réflexion vers un autre module. Cela permet ainsi d'optimiser l'efficacité énergétique du module.
- Avantageusement, la zone de réflexion de la première face et la zone de réflexion de la deuxième face sont disposées en regard l'une de l'autre et de part et d'autre du plan médian de chaque module de collecte.
- Avantageusement, la zone de réflexion de la première face et/ou la zone de réflexion de la deuxième face comprennent au moins un film sélectif présentant une transmittance et une réflectance sélectives relativement aux rayons solaires incidents de sorte à réfléchir entre 10% et 85% des rayons solaires incidents, de préférence entre 15% et 50%, et avantageusement entre 20% et 35%.
   Cela permet de sélectionner et de réguler la quantité de rayons solaires incidents réfléchis par les zones de réflexion.
   Par ailleurs, le module est configuré de sorte qu'une partie au moins des rayons solaires non réfléchis traverse le module de collecte.
   Ainsi, le module est configuré de sorte qu'une partie au moins des rayons solaires incidents parvenant sur la zone de réflexion et qui ne sont pas réfléchis traverse le module de collecte.
   Selon un mode de réalisation, le film sélectif peut présenter une coloration identique ou proche de la couleur des zones de conversion de sorte que les zones de conversion et les zones de réflexion ne présentent pas une différence de couleur trop visible, ce qui serait peu esthétique voire inconfortable visuellement pour les personnes situées dans le bâtiment 400.
- Avantageusement, le dispositif de couplage comprend au moins une structure de support destinée à être fixée sur une infrastructure telle qu'un bâtiment, chaque module de collecte étant monté en rotation sur ladite structure de support autour d'un axe de rotation, les axes de rotation des modules de collecte étant parallèles entre eux. Cela permet d'ajuster le positionnement des modules de collecte relativement à la position du Soleil.
- Avantageusement, chaque module de collecte présente une dimension principale d'extension colinéaire à son axe de rotation.
   Cela permet d'orienter via une simple rotation la première et la deuxième surface de chaque module de collecte relativement à la position du soleil.
- Alternativement, les axes de rotation des modules de collecte sont verticaux.
- Avantageusement, les axes de rotation des modules de collecte sont horizontaux. Ce mode de réalisation est avantageux lorsque le système de collecte est disposé sur le toit d'une structure.
- Avantageusement, le dispositif de couplage est configuré pour piloter la position des modules de collecte de manière à ce que les rayons solaires incidents forment avec l'une parmi la première face et la deuxième face de chaque module de collecte un angle d'incidence obtus. Ainsi, le système ne vise pas à disposer les modules de collecte de sorte à ce que la direction d'incidence des rayons solaires soit perpendiculaire aux modules de collecte.
   Cela permet de réfléchir une partie au moins des rayons solaires incidents depuis une zone de réflexion d'un module de collecte donné vers une pluralité de cellules photovoltaïques d'un module de collecte adjacent, tout en laissant une partie au moins des rayons solaires incidents traverser le système de collecte.
- Avantageusement, les rayons solaires incidents forment avec l'une parmi la première face et la deuxième face de chaque module de collecte un angle compris entre 20° et 80°, de préférence entre 30° et 65° et avantageusement entre 40° et 55°. On notera que ces valeurs peuvent être fonction de la taille des modules de collecte et en particulier de la taille des zones de conversion, mais également en fonction de la localisation des modules de collecte, de l'heure, de la saison, etc....
   Cela permet d'améliorer l'efficacité énergétique du système.
- Selon un mode de réalisation, chaque module de collecte présente une partie proximale solidaire d'une structure de support et une partie distale, dans lequel les zones de conversion sont situées entre la partie distale et les zones de réflexion. Les zones de réflexion sont situées entre la partie proximale et les zones de conversion.
   Ainsi, sont successivement disposées depuis la structure de support : la partie proximale, les zones de réflexion, les zones de conversion et la partie distale.
   Cela permet de réfléchir une partie au moins des rayons solaires incidents depuis une zone de réflexion d'un module de collecte donné vers une pluralité de cellules photovoltaïques d'un module de collecte adjacent, tout en laissant une partie au moins des rayons solaires incidents traverser le système de collecte.
- Avantageusement, le dispositif de couplage comprend au moins un dispositif de pilotage configuré pour ajuster au cours du temps la position des modules de collecte les uns par rapport aux autres, en fonction d'au moins l'un des paramètres suivants :
   ∘ la date et l'heure,
   ∘ une température à l'intérieur d'une infrastructure, telle que bâtiment, sur laquelle le système de collecte est fixé,
   ∘ une température extérieure,
   ∘ une température opérative, c'est-à-dire une température ressentie par un utilisateur à l'intérieur d'une infrastructure,
   ∘ une température de l'air à l'intérieur d'une infrastructure,
   ∘ un indice d'éblouissement perçu par une personne à l'intérieur d'une infrastructure telle qu'un bâtiment, sur laquelle le système de collecte est fixé,
   ∘ une intensité lumineuse extérieure, de préférence reçue par le système de collecte ou à proximité du système de collecte,
   ∘ une intensité lumineuse à l'intérieure d'une infrastructure telle qu'un bâtiment, sur laquelle le système de collecte est fixé,
   ∘ l'inclinaison des rayons solaires incidents par rapport au système de collecte,
   ∘ un paramètre météorologique pris parmi : la vitesse du vent, la direction du vent, la présence de pluie,
   ∘ une orientation géographique du système de collecte,
   ∘ une inclinaison du système de collecte relativement à l'horizon.

   Même si ces deux derniers paramètres ne varient pas au cours du temps, le pilotage continu de la position des modules peut prendre en compte ces deux paramètres afin d'améliorer encore l'efficacité énergétique du système de collecte.
- Avantageusement, le dispositif de couplage comprend au moins un dispositif de pilotage configuré pour ajuster la position des modules de collecte les uns par rapport aux autres, en fonction d'au moins un paramètre pris parmi :
   ∘ une intensité lumineuse extérieure, de préférence reçue par le système de collecte ou à proximité du système de collecte,
   ∘ une intensité lumineuse à l'intérieure d'une infrastructure telle qu'un bâtiment, sur laquelle le système de collecte est fixé,
   ∘ un éblouissement à l'intérieur de l'infrastructure ou du bâtiment, évalué par exemple avec un capteur d'imagerie ou un capteur d'éblouissement, et représentatif d'un éblouissement perçu par une personne située dans l'infrastructure,
   ∘ l'inclinaison des rayons solaires incidents par rapport au système de collecte.
- Avantageusement, le système de collecte est fixé sur une façade ou sur le toit d'un bâtiment.
- Avantageusement, le dispositif de pilotage comprend au moins un module de réception d'au moins un paramètre variable dans le temps de sorte à ce que l'ajustement de l'orientation des modules de collecte soit fonction au moins dudit paramètre variable dans le temps.
- Avantageusement, le dispositif de pilotage est couplé à un capteur captant ledit au moins un paramètre variable.
- Selon un mode de réalisation, le capteur est un capteur d'intensité lumineuse et d'évaluation de confort visuelle (comprenant un capteur d'éblouissement par exemple), un capteur de température (sèche et/au opérative), rayonnement solaire incident.
- Avantageusement, les zones de conversion sont configurées de manière à ne pas permettre aux rayons solaires incidents de les traverser. Ainsi, l'essentiel du rayonnement lumineux, c'est-à-dire des rayons solaires incidents, parvenant sur une zone de conversion est absorbé par les cellules photovoltaïques puis converti en électricité. Les rayons solaires incidents qui parviendraient sur une zone de conversion sans être absorbés sont quant à eux réfléchis.
- L'invention n'est pas limitative d'un agencement spécifique de l'au moins une zone de conversion par rapport à l'au moins une zone de réflexion. Ainsi, selon un mode de réalisation, les zones de conversion et les zones de réflexion peuvent être disposées côte à côte. Selon un autre mode de réalisation, l'une de ces deux zones peut entourer entièrement ou partiellement l'autre zone.
- Selon un autre mode de réalisation, une même face d'un module peut présenter plusieurs zones disjointes de conversion et/ou plusieurs zones disjointes de réflexion. Selon un mode de réalisation, les zones de conversion et les zones de réflexion sont adjacentes.
- Selon un mode de réalisation, le système de collecte comprend au moins deux et de préférence au moins trois modules.

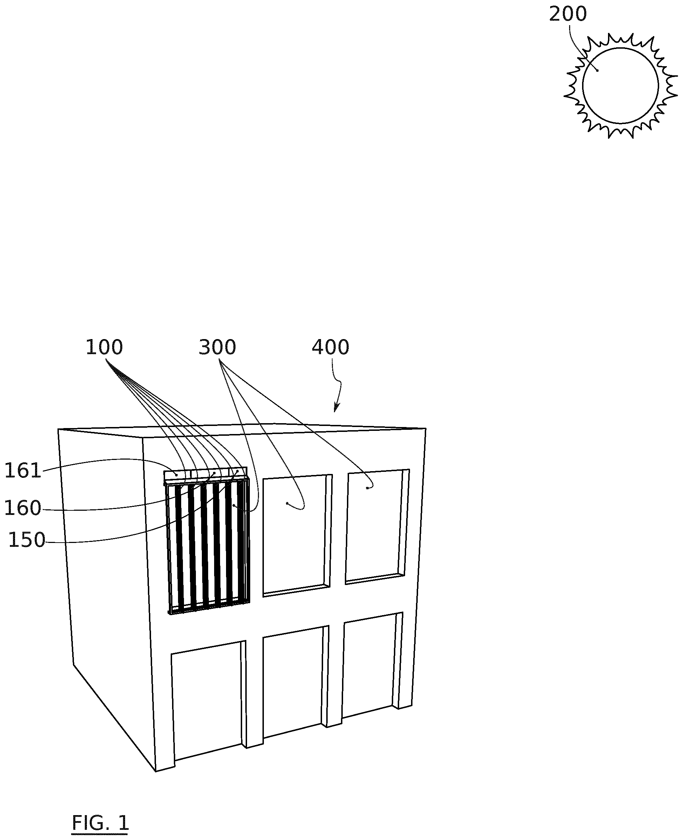

Nous allons à présent décrire la présente invention au travers de modes de réalisation illustrés sur les figures 1 à 7.

La figure 1 représente un bâtiment 400 comprenant une pluralité de parois vitrées 310. Ces parois vitrées peuvent prendre différentes formes. Elles peuvent équiper des fenêtres 300 ou former une partie de l'enveloppe externe du bâtiment 400 comme c'est bien souvent le cas dans des bâtiments tertiaires entièrement vitrés. Au moins l'une des parois vitrées 310 est associée à un système de collecte d'énergie solaire selon la présente invention.

De manière particulièrement avantageuse, et comme cela sera exposé par la suite, le système de collecte comprend une pluralité de modules de collecte 100 qui permettent ensemble :
- de convertir de l'énergie lumineuse en électricité par phénomène photovoltaïque ;
- de réguler la quantité de lumière traversant le système et donc de réguler le flux lumineux pénétrant au travers d'une surface située à l'arrière du système de collecte, par exemple la paroi vitrée 310 de la fenêtre 300 comme dans la figure 1.

Cela permet dès lors d'une part de collecter de l'énergie et d'autre part de réguler la température et/ou la luminosité d'une pièce via la régulation du flux lumineux pénétrant dans cette pièce.

Bien que particulièrement avantageuse lorsqu'elle est associée à une paroi vitrée 310, l'invention s'étend aussi aux applications dans lesquelles le système de collecte d'énergie n'est pas associé à une paroi vitrée 310.

Selon un mode de réalisation, le système de collecte de la présente invention comprend une pluralité de modules de collecte 100 présentant une dimension principale d'extension verticale sur la figure 1. Selon un autre mode de réalisation, cette dimension principale d'extension peut être horizontale, par exemple lorsque le système de collecte est situé sur un toit. Toute inclinaison entre l'horizontal et la verticale est également possible.

Il est à noter que de manière préférée, mais non limitative, les modules de collecte 100 d'un même système de collecte sont disposés les uns à côté des autres de sorte à ce que leurs dimensions principales d'extension soient parallèles.

De manière avantageuse, la dimension principale d'extension des modules de collecte 100 est déterminée en fonction de l'exposition du système de collecte relativement au Nord, ou plus généralement relativement à la position du Soleil 200. De préférence la dimension principale d'extension des modules de collecte 100 est déterminée en fonction de l'orientation de la surface située à l'arrière du système de collecte, ici l'élément vitré 310 de la fenêtre 300, relativement à la position du Soleil 200.

Ainsi par exemple, si le système de collecte est exposé au Sud, il sera avantageux de disposer les modules de collecte 100 de sorte que leurs dimensions principales d'extension soient horizontales afin de présenter une surface de collecte maximum au Soleil 200 tout au long de la journée. Pour une exposition différente, il conviendra de positionner les modules de collecte 100 de sorte que leurs dimensions principales d'extension soient de préférence verticales afin de permettre un suivi de la course du Soleil 200 dans le ciel tout au long de la journée via un ajustement de leur orientation relativement au Soleil 200. Cet ajustement est de préférence obtenu en faisant tourner les modules de collecte 100.

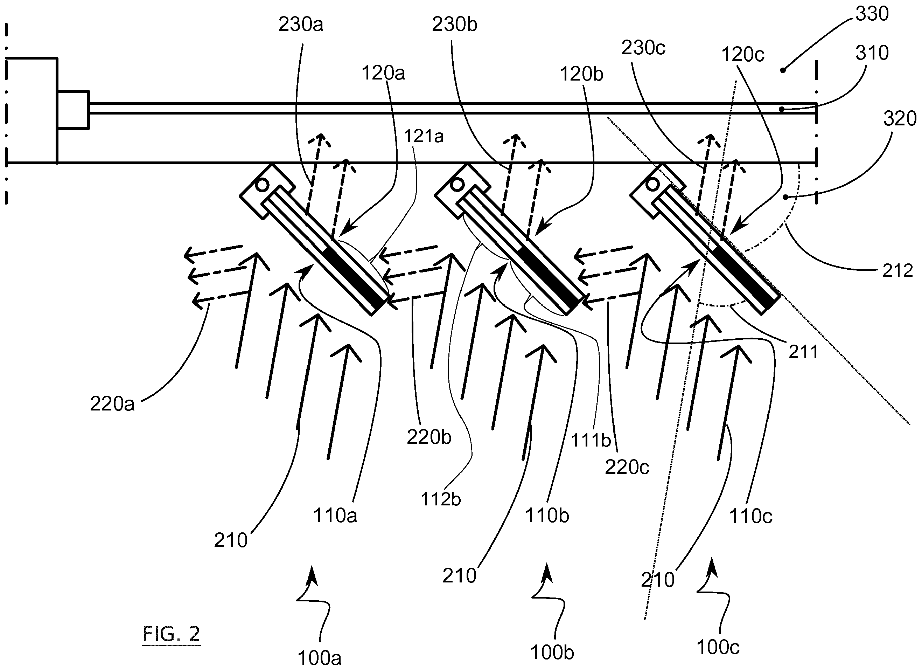

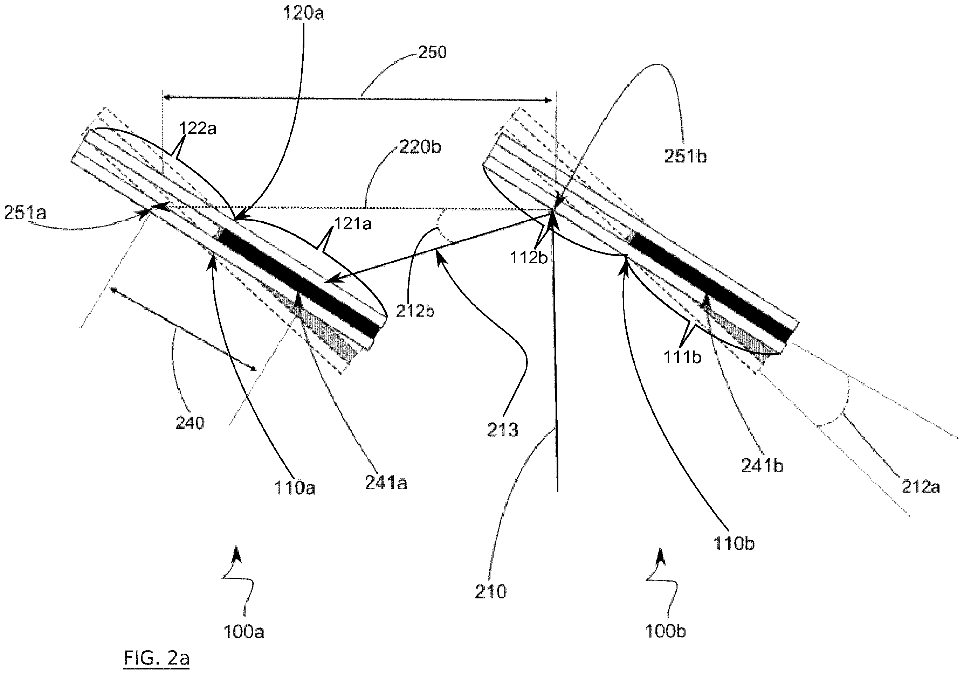

L'orientation relative des modules de collecte 100, leur orientation par rapport au Soleil 200 ainsi que les interactions entre les modules de collecte adjacents vont maintenant être décrites en détail en référence aux figures 2 à 5e.

La figure 2 présente une vue du dessus d'un système de collecte selon un mode de réalisation de la présente invention.

Sur cette figure uniquement trois modules de collecte 100a, 100b et 100c sont représentés par souci de clarté. On notera qu'un système de collecte selon l'invention comprend au moins deux modules de collecte 100 et peut comprendre un nombre de modules de collecte 100 bien plus élevé que trois.

Comme illustré en figure 2, le système de collecte est disposé à l'extérieur 320 d'un bâtiment 400. Il est par exemple fixé sur la face extérieure d'une paroi vitrée 310 d'une fenêtre 300.

Chaque module de collecte 100a-100c comprend au moins une première face 110a-110c et une deuxième face 120a-120c, opposée à la première face 110a-110c. Chacune des première 110a-110c et deuxième 120a-120c faces comprend:
- au moins une zone de conversion 111, 121 comprenant une pluralité de cellules photovoltaïques 115, 125. Plus précisément, la première 110 et la deuxième 120 faces comprennent respectivement une première pluralité 115 et une deuxième pluralité 125 de cellules photovoltaïques. Ainsi les photons des rayons solaires incidents 210 parvenant sur la zone de conversion 111, 121 sont convertis en énergie électrique par les cellules photovoltaïques 115, 125.
- au moins une zone de réflexion 112, 122 configurée pour réfléchir une partie des rayons solaires incidents. De préférence, une partie des rayons solaires incidents 210 parvenant sur la zone de réflexion 112, 122 est réfléchie. Selon un mode de relation privilégiée, une autre partie de ces rayons solaires incidents 210 traverse le module de collecte 100a-100c.

Par ailleurs, le système de collecte comprend un dispositif de couplage 150 configuré pour piloter la position relative des modules de collecte 100a-100c.

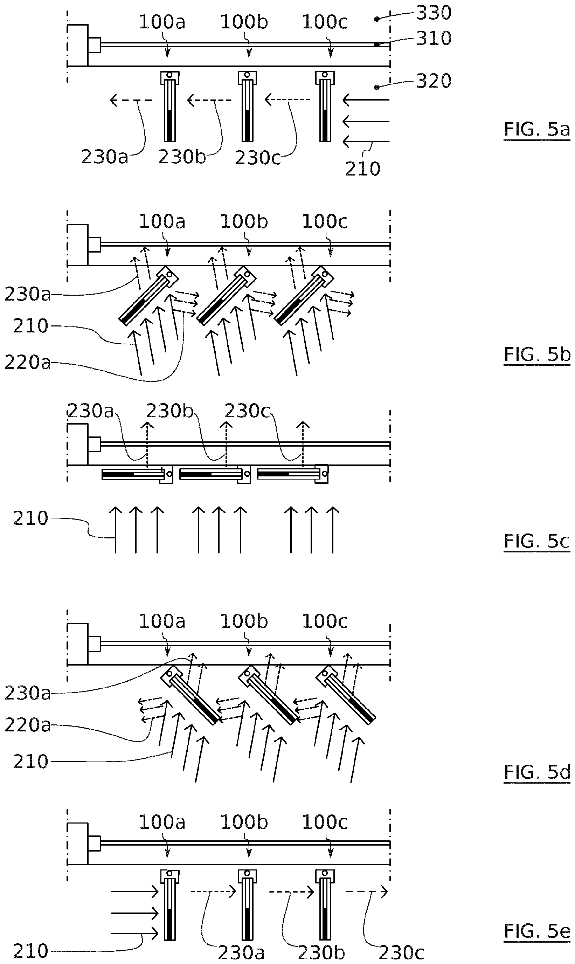

Ce pilotage est effectué de sorte que dans une première position relative des modules de collecte 100a-100c, comme la position illustrée en figures 2 et en figure 5d, des rayons solaires incidents 210 qui arrivent sur la zone de conversion 111b de la première face 110b de l'un des modules de collecte (par exemple le module de collecte 100b) sont convertis en électricité.

Par ailleurs, une partie des rayons solaires incidents 210 arrivant sur la zone de réflexion 112b de la première face 110b de ce module 100b traversent 230b en partie le module de collecte 100b. Ces rayons peuvent ainsi illuminer l'intérieur 330 du bâtiment portant la paroi vitrée 310.

Enfin, une autre partie des rayons solaires incidents 210 arrivant sur la zone de réflexion 112b de la première face 110b de ce module 100b sont réfléchis 220b en direction de la zone de conversion 121a de la deuxième face d'un module de collecte adjacent 100a au module de collecte 100b, par exemple le module 100a. Ainsi, ces rayons réfléchis 220b peuvent être absorbés et convertis en électricité par la zone de conversion 121a du module de collecte 100a.

De manière particulièrement astucieuse, lorsque l'inclinaison du rayonnement incident change, le dispositif de couplage 150 est configuré pour disposer les modules de collecte 100a-100c dans une deuxième position. Cette deuxième position est par exemple illustrée en figure 5b. Dans cette deuxième position, une partie au moins des rayons solaires incidents 210 arrivant sur la zone de réflexion 122a de la deuxième face 120a du module de collecte 100a sont réfléchis 220a en direction de la zone de conversion 121b de la deuxième face 120b du module de collecte 100b.

Avantageusement, une autre partie des rayons solaires incidents 210 arrivant sur la zone de réflexion 122a traversent 230a le module de collecte 100a. Ils peuvent ainsi illuminer l'intérieur 330 du bâtiment 400 équipé de la paroi vitrée 310.

Par ailleurs, des rayons solaires incidents 210 arrivant sur la zone de conversion 121a de la deuxième face 120a du module de collecte 100a sont convertis en électricité.

Ainsi, lorsque des rayons solaires incidents 210 arrivent au niveau du système de collecte, plus précisément au niveau des premier 100a, deuxième 100b et troisième 100c modules de collecte, une partie au moins des rayons solaires incidents 210 est absorbée au niveau d'une pluralité de cellules photovoltaïques de chaque module de collecte 100a, 100b et 100c. Une autre partie au moins des rayons solaires incidents sont réfléchis en partie au moins par une zone de réflexion 112, 122 de chaque module de collecte 100a, 100b et 100c et sont transmis en partie au moins au travers de ces zones de réflexion 112, 122 de sorte à pénétrer au travers de l'élément vitré 310.

On notera que chaque module de collecte 100a, 100b et 100c est de préférence disposé relativement à l'élément vitré 310 de manière identique, c'est-à-dire que l'angle 212 formé par chaque module de collecte avec la façade supportant le système de collecte (typiquement la surface de l'élément vitré 310) est identique. Nous appellerons cet angle 212 « l'angle de configuration » pour la suite de cette description.

On notera également que compte tenu de l'espacement existant entre chaque module de collecte 100a-100c, un flux d'air circule entre chaque module de collecte 100a-100c permettant ainsi un refroidissement des cellules photovoltaïques. Cela contribue à améliorer le rendement énergétique du système de collecte selon la présente invention.

Selon un mode de réalisation, le dispositif de couplage 150 comprend au moins un actionneur moteur configuré pour entraîner en rotation les modules de collecte 100a-100c autour de leur axe de rotation 131 respectif. De manière préférée, la rotation de chaque module de collecte est identique, c'est-à-dire que l'angle de rotation est le même pour tous les modules de collecte 100a-100c. Cela permet par exemple de disposer d'un dispositif de couplage simple et fiable. De préférence, un seul actionneur moteur entraîne en rotation la pluralité de modules de collecte 100a-100c. On peut par exemple prévoir qu'un moto réducteur entraîne en rotation un arbre, l'arbre étant couplé par des renvois d'angle à chacun des modules de collecte 100a-100c pour entraîner en rotation ces derniers autour de leurs axes de rotation 131 respectifs.

Selon un autre mode de réalisation, un actionneur moteur distinct entraîne chaque module de collecte 100a-100c de sorte à permettre à chaque module de collecte 100a-100c de présenter une configuration angulaire distincte.

Comme cela sera exposé par la suite, ce dispositif de couplage 150 comprend un dispositif de pilotage 160 qui prend en compte des paramètres évoluant dans le temps afin d'orienter chaque module de collecte relativement aux autres modules de collecte et par rapport à l'angle d'incidence des rayons solaires.

La figure 2a représente, selon un mode de réalisation, un exemple de dynamique d'ajustement de la configuration de deux modules de collectes adjacents présentant un décalage angulaire 212a, par rapport à une configuration classique, ceci afin de diriger des rayons solaires réfléchis 213 en direction d'une zone de conversion , ces rayons solaires réfléchis 213 étant décalés par aux rayons solaires réfléchis 220b dans une configuration classique.

Sur cette figure, on notera que la configuration des premier 100a et deuxième 100b modules de collecte a pour but de décaler les rayons lumineux réfléchis 220b d'un angle 212b de sorte à ce qu'ils correspondent aux rayons réfléchis décalés 213.

En particulier, sur cette figure des rayons solaires incidents 210 arrivent au niveau de la première face 110b du deuxième module de collecte 100b et plus particulièrement au niveau de la zone de réflexion 112b du deuxième module de collecte 100b où ils sont alors en partie au moins réfléchis en direction du premier module de collecte 100a, et plus particulièrement en direction de la deuxième face 120a du premier module de collecte 100a.

En l'absence d'un décalage angulaire 212a de la configuration du deuxième module de collecte relativement à une configuration classique, ces rayons réfléchis correspondent aux rayons réfléchis 220b et arrivent dès lors au niveau de la zone de réflexion 122a du premier module de collecte 100a. Les modules 100a, 100b sont représentés en pointillés lorsqu'ils sont positionnés dans leur configuration classique et les rayons 220b réfléchis sont également représentés en pointillés.

En présence d'un décalage angulaire 212a, ces rayons réfléchis correspondent aux rayons réfléchis 213 (représentés en traits pleins) et arrivent dès lors au niveau de la zone de conversion 121a du premier module de collecte 100a.

Ainsi, il convient d'imposer un décalage angulaire 212a aux modules de collecte 100a, 100b, entrainant le décalage angulaire 212b relativement à la normale de la première surface du deuxième module de collecte 100b, afin d'optimiser la collecte d'énergie.

Sur cette figure sont représentés les centres géométriques 241a, 241b des zones de conversion 121a et 111b des premier 100a et deuxième 100b modules de collecte ainsi que les centres géométriques 251a, 251b des zones de réflexion 122a et 112b du premier 100a et du deuxième 100b modules de collecte.

De même sur cette figure sont représentées la distance 240 entre le centre géométrique 241a d'une zone de conversion et le centre géométrique 251a d'une zone de réflexion d'un même module de collecte, ainsi que la distance 250 entre les centres géométriques 251a et 251b des zones de conversion des premier et deuxième modules de collecte 100a et 100b.

Enfin, cette figure illustre les deux angles 212b et 212a. L'angle 212b est défini comme étant formé entre une ligne passant par le centre géométrique des zones de réflexion 251a, 251b des deux modules de collectes 100a et 100b et une ligne passant par le centre géométrique 241a d'une zone de conversion du premier module de collecte 100a et par le centre géométrique 251b d'une zone de réflexion du deuxième module de collecte100b. Le décalage angulaire 212a est de préférence égal à la moitié de l'angle 212b (i.e., 212b = 2 ^{∗} 212a).

Ainsi, cet angle de décalage 212a, et donc l'angle de décalage angulaire 212b également, sont fonction des paramètres dimensionnels des modules de collecte et de leur positionnement spatial respectif. Une fois le système installé, ces données étant connues, le décalage angulaire 212a peut alors être déterminé et intégré au système afin d'optimiser la collecte d'énergie solaire.

Le décalage angulaire 212b par rapport à la normale aux modules est ainsi choisi de manière à ce qu'une partie au moins des rayons solaires soit réfléchie depuis une zone de réflexion d'un module en direction de la zone de conversion d'un module adjacent.

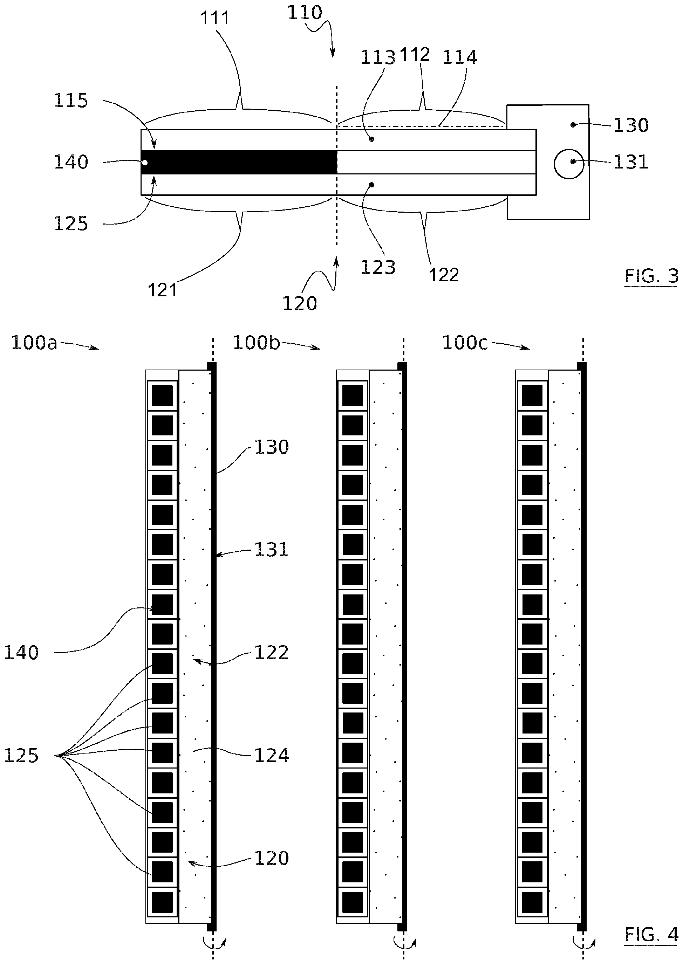

Au travers des figures 3 et 4, nous allons à présent décrire plus en détail un module de collecte 100.

De manière à simplifier la production et la maintenance du système selon la présente invention, tous les modules de collecte 100a-100c sont identiques les uns aux autres.

La figure 3 est une vue du dessus d'un module de collecte 100 selon un mode de réalisation de la présente invention.

Selon un mode de réalisation, le module de collecte 100 comprend une première pluralité de cellules photovoltaïques 115 et une deuxième pluralité de cellules photovoltaïques 125, respectivement tournées en regard des premières 110 et deuxième 120 faces du module de collecte.

De manière avantageuse et préférée, la première 115 et deuxième 125 pluralité de cellules photovoltaïques peuvent être formées d'une seule pluralité de cellules photovoltaïques bifaciales 140.

Cela simplifie grandement la fabrication de la présente invention, ainsi que son entretien, sa maintenance et sa longévité. De manière connue, des cellules photovoltaïques bifaciales présentent deux faces principales opposées qui sont chacune configurées pour convertir des photons en électricité.

Selon un mode de réalisation, la pluralité de cellules photovoltaïques bifaciales 140 est de préférence laminée, et peut être transparente ou opaque relativement à une partie au moins des rayons solaires incidents 210.

Cette pluralité de cellules photovoltaïques bifaciales 140 est disposée entre un premier élément transparent 113, de préférence en verre, et un deuxième élément transparent 123, lui aussi de préférence en verre. De préférence, le premier 113 et le deuxième 123 éléments transparents s'étendent sur la zone de conversion 111, 121 et sur la zone de réflexion 112, 122 d'une même face 110, 120. De préférence, ces éléments transparents 113, 123 s'étendent respectivement sur toute la surface des faces 110, 120.

Selon un mode de réalisation non illustré, le premier 113 et le deuxième 123 éléments transparents peuvent être fixées aux zones de conversion 111, 121, par exemple par une colle transparente, d'un polymère thermodurcissable ou d'un polymère thermodéformable, comme par exemple du Polyméthacrylate de méthyle, des matériaux composites, etc.

De manière avantageuse, le premier 113 et le deuxième 123 élément transparents assurent une protection des cellules photovoltaïques 115, 125, 140 relativement à l'environnement extérieur, par exemple relativement aux conditions météorologiques.

De manière préférée, mais non limitative, le premier 113 et le deuxième 123 éléments transparents sont solidaires d'une structure de support 130. Cette structure de support 130 est mécaniquement couplée au dispositif de couplage 150 non représenté.

Avantageusement, le module de collecte 100 définit un plan médian sensiblement parallèle à la première face 110 et à la deuxième face 120. Le premier 113 et le deuxième 123 éléments transparents s'étendent selon des plans parallèles audit plan médian.

De manière générale, les premières 110 et deuxièmes 100 faces sont de préférence symétriques par rapport au plan médian du module de collecte.

Selon un mode de réalisation alternatif à l'utilisation de cellules photovoltaïques bifaciales, la première 115 et deuxième 125 pluralité de cellules photovoltaïques sont formées de cellules photovoltaïques mono face. De manière connue, des cellules photovoltaïques mono face présentent deux faces principales opposées, seule l'une de ces faces étant configurée pour convertir des photons en électricité, l'autre face n'étant pas active. Les faces non actives de la première 115 et deuxième 125 pluralités de cellules photovoltaïques sont tournées en regard l'une de l'autre, de sorte à ce que les faces actives soient respectivement tournées en regard des premières 110 et deuxième 120 faces du module de collecte.

Sur l'exemple illustré en figure 3, pour chacune des faces 110,120, la zone de conversion 111, 121 est juxtaposée à la zone de réflexion 112, 122. De préférence, toute la surface de chacune des faces 110, 120 est occupée soit par la zone de conversion 111, 121 soit par la zone réflexion 112, 122. Cela permet d'augmenter l'efficacité énergétique du système.

De préférence, la zone de conversion 111, 121 et la zone de réflexion 112, 122 occupent chacune 50% de chaque face 110, 120 de chaque module de collecte 100a-100c. Plus généralement, la zone de conversion 111, 121 et la zone de réflexion 112, 122 occupent chacune entre 30 et 70% des faces 110, 120.

Selon un mode de réalisation optionnel, la zone de réflexion 112, 122 peut comprendre également un premier film sélectif 114 présentant une transmittance et une réflectance sélectives relativement à une partie au moins des rayons solaires incidents 210. Ce premier film sélectif 114 permet de choisir la quantité de rayons solaires réfléchis 220 et transmis 230.

Ce film sélectif 114, 124 est disposé dans le module 100 de manière à être atteint par les rayons solaires incidents parvenant sur la zone de réflexion 112, 122. Ce film sélectif peut soit être disposé dans l'épaisseur du module 100, soit sur l'une, soit sur les deux faces 110, 120. Sur l'exemple illustré, le film sélectif 114 est disposé sur la zone de réflexion 112 de la face 110 uniquement. Ainsi, il est atteint par les rayons parvenant sur la face 110, mais aussi par ceux parvenant sur la face 120. En effet, entre la face 120 et le film sélectif il n'y a pas d'élément réfléchissant ou absorbant les rayons solaires incidents.

Avantageusement, ce film sélectif 114, 124 peut être disposé au niveau de la zone de réflexion 112, 122 au moyen d'un adhésif, ou bien via un dépôt. Selon un autre mode de réalisation, les cellules photovoltaïques 115, 125 subissent une étape de laminage sur au moins un parmi le premier et le deuxième éléments transparents 113, 123, de préférence le film sélectif 114, 124 peut être simultanément laminé au niveau de la zone de réflexion 112, 122.

En effet, au droit des zones de réflexion 112, 122 et entre les éléments transparents 113, 123, il y a de préférence soit un élément transparent pouvant être une colle transparente ou un polymère transparent, soit un élément transparent et de l'air ou du vide.

Selon un mode de réalisation, au moins sur l'une des faces 110, 120, l'élément transparent ne recouvre que la zone de conversion ou qu'une partie de la zone de conversion, la zone de réflexion de cette face n'étant pas recouverte par ledit élément transparent.

Ainsi, selon une variante de ce mode de réalisation, le premier élément transparent 113 peut présenter une dimension d'extension supérieure à celle du deuxième élément transparent 123, ou inversement. Selon ce mode de réalisation, le deuxième élément transparent 123 est disposé dès lors uniquement au niveau de la deuxième zone de conversion 121. Dans ce mode de réalisation, la deuxième zone de réflexion 122 n'existe alors pas. Ce mode de réalisation prévoit ainsi un premier élément transparent de dimensions supérieures au deuxième, celui-ci ne servant dès lors que de protection pour les zones de conversion.

La figure 4 représente une vue de côté de plusieurs modules de collecte 100a-100c, présentant certaines des caractéristiques du module de collecte 100 illustré précédemment en figure 3.

Sur la figure 4, c'est la deuxième face 120 du module de collecte 100a-100c qui est visible.

Cette deuxième face 120 présente une pluralité de cellules photovoltaïques 125 alignées selon la dimension principale d'extension du module de collecte 100. Cette pluralité de cellules photovoltaïques 125 est disposée de préférence au niveau d'une partie distale du module de collecte 100, la structure de support 130 étant située au niveau d'une partie proximale du module de collecte 100a.

Ainsi, sont successivement disposées depuis la structure de support 130 et l'axe de rotation 131 : la zone de réflexion 112, 122 puis la zone de conversion 111,121, puis l'extrémité distale du module.

Ce mode de réalisation présente pour avantage d'augmenter les chances que les rayons réfléchis par la zone de réflexion 112, 122 d'un module atteignent effectivement les zones de conversion 111,121 d'un module adjacent.

Ce mode de réalisation présente aussi pour avantage de permettre aux occupants du bâtiment de voir l'environnement extérieur à travers les zones de réflexion 112, 122 qui présentent chacune une surface significative.

Naturellement dans le cadre de la présente invention, d'autres dispositions relatives des zones de conversion et de réflexion peuvent être envisagées. Par exemple, il est possible d'avoir l'une parmi la zone de conversion et la zone de réflexion qui entoure, partiellement ou entièrement, l'autre parmi la zone de conversion et la zone de réflexion.

Selon encore un autre mode de réalisation, les zones de conversion et de réflexion peuvent être disposées en alternance sur une même face 110, 120 d'un module. Ainsi selon ce mode de réalisation, la surface de chacune des zones de réflexion est plus faible que dans les modes de réalisation illustrés sur les figures.

Dans le mode de réalisation illustré sur cette figure 4, et contrairement à celui illustré en figure 3, c'est la zone de réflexion 122 de la deuxième face 120 qui comprend au moins un film sélectif 124.

Selon un autre mode de réalisation, non illustré, au moins un film sélectif peut être disposé sur la face interne respectivement du premier élément transparent 113 et/ou du deuxième élément transparent 123. Cela permet une plus grande longévité des films sélectifs 114 et 124 du fait de leur non-exposition directe à l'environnement extérieur.

Nous allons à présent décrire, au travers des figures 5a à 5d, un mode de réalisation du pilotage du système de collecte d'énergie au cours d'une journée. Ces figures illustrent certaines des étapes d'ajustement de l'angle 212 de configuration des modules de collecte relativement à l'évolution de la position du soleil 200 dans le ciel au cours de la journée. Sur ces figures, la façade du bâtiment qui est équipée du système de collecte est orientée en direction du Sud.

La figure 5a correspond à une configuration possible du système de collecte aux premières heures du lever du Soleil 200. Ainsi l'angle d'incidence, c'est-à-dire l'angle formé par la direction principale d'incidence des rayons solaires incidents provenant de l'Est et par la normale au plan contenant la face des modules de collecte est proche de 0 degré. Dans cette même configuration, l'angle 212 formé par les modules de collecte avec la surface de la façade portant l'élément vitré 310 est proche de 90 degrés.

Selon un mode de réalisation non illustré, l'angle d'incidence peut être non nul de sorte à permettre une réflexion depuis au moins l'une parmi la première et la deuxième zone de réflexion 112, 122 d'une partie au moins des rayons solaires incidents 210 en direction par exemple d'un élément vitré 310 afin de permettre d'accroître l'éclairement d'une pièce par des rayons solaires réfléchis 220.

De plus selon un autre mode de réalisation, les plans médians définis par chaque module de collecte ne sont pas nécessairement tous parallèles entre eux, afin de réduire ou d'augmenter le flux solaire traversant l'élément vitré 310 afin d'accroître la production d'énergie par conversion photovoltaïque.

La figure 5b correspond à une configuration possible du système de collecte au cours de la matinée.

Dans cette configuration les modules de collecte 100a-100c sont disposés de sorte à ce que leurs deuxièmes faces 120 soient exposées aux rayons solaires incidents 210. Dans cette configuration :
- les cellules photovoltaïques 125 de ces deuxièmes faces collectent de l'énergie solaire,
- les zones de réflexion 122 de ces faces 120 réfléchissent une partie au moins des rayons solaires incidents 210 en direction des cellules photovoltaïques 115 des modules de collecte adjacents. Par ailleurs, les zones de réflexion 122 de ces faces 120 transmettent une partie au moins des rayons solaires incidents 210 à travers toute l'épaisseur de leur module de collecte de sorte à pénétrer au travers de l'élément vitré 310. Ainsi de la lumière et/ou de la chaleur est apportée à l'intérieure de la pièce comprenant l'élément vitré 310.

De manière avantageuse, le dispositif de pilotage 160 est configuré de sorte à ce que l'angle 211 formé par les rayons solaires incidents 210 avec l'une parmi la première 110 et la deuxième 210 faces des modules de collecte 100 soit égal à l'angle 212 de configuration, c'est-à-dire à l'angle formé entre la surface de l'élément portant le système de collecte et le plan médian défini par chaque module de collecte.

De manière avantageuse, l'ajustement de la configuration des modules de collecte consiste à ce que ces deux angles 211 et 212 soient maintenus égaux ou à ce que leur différence soit inférieure à 5 degrés.

La figure 5c correspond à une possible configuration du système de collecte selon un mode de réalisation aux environs de midi. Dans cette configuration, l'angle d'incidence est une nouvelle fois proche de 0 et il en est de même de l'angle 212 de configuration de chaque module de collecte 100a-100c.

Ainsi, dans cette configuration une seule face des modules de collecte 100a-100c reçoit et collecte de l'énergie solaire. Il s'agit, sur cette figure de la deuxième 120 face.

Selon un mode de réalisation, cette configuration peut être adaptée afin de protéger l'élément vitré 31 et les modules de collecte 100a, 100b, par exemple en cas de tempêtes ou de conditions météorologiques particulières.

La figure 5d, similaire à la figure 2 précédemment décrite, est le symétrique de la figure 5b précédente et correspond à une configuration possible du système de collecte au cours de l'après-midi. Sur cette figure, c'est la première face 110 de chaque module de collecte 100a-100c qui reçoit les rayons solaires incidents 210.

La figure 5e, elle, correspond à une configuration possible du système de collecte lors du coucher du Soleil 200 à l'Ouest.

Il convient naturellement d'interpréter les figures 5a à 5d comme des exemples de configurations possibles du système de collecte au cours de la journée. En effet, d'une part d'autres configurations sont envisageables en fonction de la position du système de collecte relativement au Soleil 200 et d'autre part la configuration du système de collecte est configurée pour évoluer de manière dynamique afin de répondre au mieux à la demande : efficacité optimale de production d'énergie photovoltaïque ou confort optimal à l'intérieur du bâtiment. Il convient donc d'ajuster la configuration du système de collecte en temps réel avec entre autres le mouvement continu du Soleil 200 dans le ciel.

Avantageusement, le dispositif de pilotage 160 comprend au moins un processeur, de préférence au moins un microprocesseur ou un microcontrôleur, au moins un module de réception 161 de données, de manière optionnelle un module de communication connecté à au moins un réseau de communication. Il comprend également au moins une mémoire non transitoire comprenant au moins un programme d'ordinateur configuré pour être exécuté par un processeur afin de mettre en oeuvre le procédé de pilotage de la présente invention. Un exemple de procédé de pilotage est défini ci-dessous.

Selon un mode de réalisation préféré, le procédé de pilotage du système de collecte comprend une séquence d'étapes dont au moins les étapes suivantes :
- Réception d'au moins un paramètre variable dans le temps ;
- Ajustement de la configuration des modules de collecte, c'est-à-dire de leur orientation relativement à la position du Soleil 200, en fonction dudit paramètre.

La présente invention est conçue pour répéter cette séquence de manière régulière et de préférence en continu de sorte à ajuster la configuration du système de collecte.

Selon un autre mode de réalisation, cette séquence est conçue pour être activée en réponse à un paramètre de programmation pouvant par exemple être une heure de la journée ou en réponse au dépassement d'une valeur seuil associée audit paramètre.

De manière préférée, le dispositif de pilotage 160 comprend un module de réception 161 dudit paramètre. Cette réception peut être filaire ou non filaire, le paramètre provenant d'un serveur informatique par exemple ou d'un capteur.

Par exemple, le module de réception 161 peut être en communication avec au moins un serveur informatique collectant une ou plusieurs données utilisées par le dispositif de pilotage 160 afin de piloter la pluralité de modules de collecte 100a-100c en fonction de cette ou de ces données.

Selon un autre mode de réalisation, le module de réception 161 est en communication avec un ou plusieurs capteurs, il peut s'agir par exemple d'un capteur de luminosité, d'un capteur d'éblouissement, d'un capteur de pression atmosphérique, d'un capteur de température, etc...

De manière particulièrement avantageuse et dans l'optique d'accroître le rendement et la gestion énergétique et thermique d'un bâtiment par exemple, le paramètre variable dans le temps peut comprendre un ou plusieurs paramètres parmi les paramètres suivants :
- L'année, le mois, le jour, l'heure, la minute, la seconde. Ces données temporelles permettent d'ajuster la configuration du système de collecte en fonction de la position théorique et prédéterminée du Soleil 200 dans le ciel.
- La position géographique du système de collecte, l'orientation géographique du système de collecte, l'inclinaison du système de collecte relativement à l'horizon. Ces données spatiales permettent d'ajuster la configuration du système de collecte en fonction de la position théorique et prédéterminée du Soleil 200 dans le ciel.
- Une température extérieure, la présence de pluie, un flux lumineux, la présence de nuages, la présence de vent, des conditions météorologiques. Ces données environnementales permettent d'ajuster la configuration du système de collecte en fonction des conditions météorologiques, de préférence en temps réel.
- Une température à l'intérieur d'un bâtiment 400, d'une pièce, un taux d'humidité d'un sol, d'une pièce, un flux lumineux, une nature de plante, un taux de chlorophylle. Ces données permettent d'ajuster la configuration du système de collecte en fonction des besoins des utilisateurs et/ou des plantes ou autres organismes vivants se situant derrière le système de collecte.

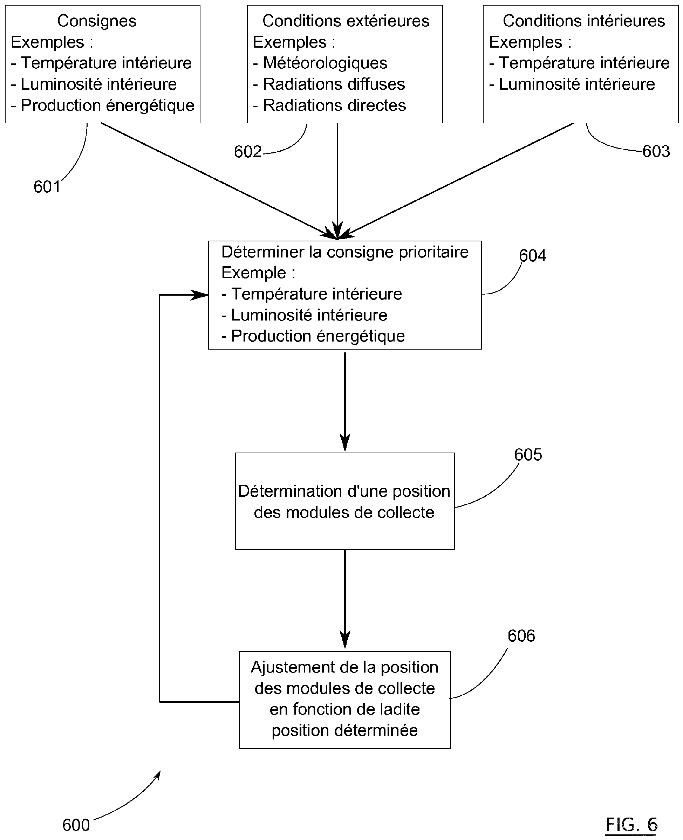

La figure 6 illustre quelques étapes d'un exemple d'algorithme de pilotage 500 selon un mode de réalisation de la présente invention. Cet exemple l'algorithme de pilotage 500 comprend notamment les étapes suivantes :
- Réception par le dispositif de pilotage 160 d'au moins une consigne 601, de préférence via le module de réception 161 par exemple. Cette consigne peut être une consigne liée à une production énergétique souhaitée, par exemple une puissance ou un rendement maximal, moyen ou faible. Cette consigne peut être également être une consigne de température ou de luminosité souhaitée dans une pièce dont au moins une fenêtre 300 est équipée de la présente invention. Il peut également s'agir d'une consigne basée sur un flux lumineux souhaité sur une surface en partie recouverte par le système de collecte, telle qu'une surface végétalisée. Typiquement cette consigne est donnée par le gestionnaire ou l'utilisateur de l'infrastructure recevant le système de collecte.
- Réception par le dispositif de pilotage 160 d'au moins une condition extérieure 602. Cette condition extérieure peut par exemple être une condition météorologique ou une condition d'exposition aux rayons solaires. Par exemple, il peut s'agir d'une condition d'ensoleillement via des radiations directes, c'est-à-dire via des rayons solaires incidents 210 directs et/ou via des radiations diffuses, c'est-à-dire via des rayons solaires incidents 210 ayant subi au moins une diffusion avant d'atteindre les modules de collecte 100a-100c.
   Cette condition peut être envoyée au dispositif de pilotage 160 par un serveur distant via des moyens de transmission de données, tel peut être le cas pour des conditions météorologiques complexes.
   De manière combinée ou alternative, cette condition peut être déterminée par un capteur équipant le système de collecte ou connecté à ce dernier.
- Réception par le dispositif de pilotage 160 d'au moins une condition intérieure 603 réelle. Cette condition intérieure peut être la température et/ou la luminosité mesurée(s) dans une pièce 330 dont au moins une paroi vitrée 131 est équipée de la présente invention. Cette condition peut également être une température ou un flux lumineux mesuré sur une surface en partie recouverte par le système de collecte, telle qu'une surface végétalisée.
Les données 601, 602, 603 sont fournies au dispositif de pilotage 160 en continue ou régulièrement ou encore lorsque une valeur suivie varie au-delà d'un seuil. Naturellement d'autres données peuvent être considérées, comme par exemple la date et l'heure.

Sur la base de ces données 601, 602, 603, le dispositif de pilotage 160 détermine ensuite la consigne qui doit être privilégiée. Cette étape est référencée 604 en figure 6.

Par exemple, si la consigne souhaitée est une production importante d'énergie mais que le ciel est nuageux et que la luminosité dans le bâtiment est faible, le dispositif de pilotage 160 peut déterminer que la consigne qui doit être privilégiée n'est pas la production d'électricité mais la luminosité dans le bâtiment.

Si au contraire les radiations directes sont importantes et que la température dans le bâtiment est suffisamment élevée, le dispositif de pilotage 160 peut déterminer que la consigne qui doit être privilégiée est la production d'électricité.

Naturellement le dispositif de pilotage 160 peut déterminer des consignes plus complexes, par exemple prenant en compte des valeurs seuil à atteindre en termes de rendement énergétique et/ou de confort dans le bâtiment.

A l'étape 605, le dispositif de pilotage 160 détermine la position que les modules de collecte 100a-100c doivent adopter pour atteindre ou tendre vers la consigne prioritaire. Cette position porte par exemple sur :
- l'angle formé entre la surface recevant les modules et le plan médian des modules de collecte 100a-100c,
- l'angle d'incidence du rayonnement solaire direct sur les modules de collecte 100a-100c.

A l'étape 606, le dispositif de couplage 150 déplace les modules de collecte en fonction de cette position déterminée.

Cet algorithme est exécuté en continue ou régulièrement réitéré dans le temps pour optimiser le rendement énergétique et le confort des utilisateurs.

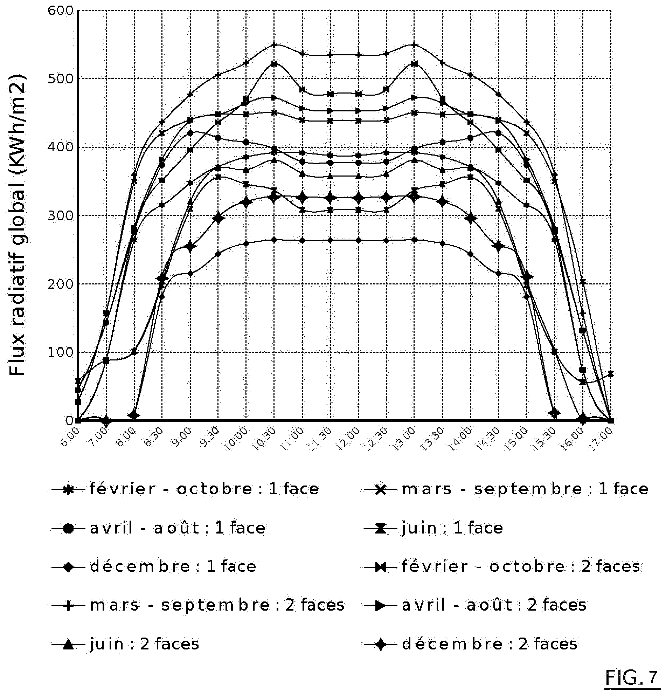

La figure 7 représente, en fonction de l'heure de la journée, une comparaison des rendements énergétiques entre un système de collecte selon la présente invention à l'exception que les modules ne comprennent des cellules photovoltaïques que sur l'une seulement de leurs deux faces et un système de collecte selon la présente invention comprenant des cellules photovoltaïques sur les deux faces de chaque module de collecte.

Cette comparaison porte sur diverses périodes de l'année. On note que le système de collecte présentant des cellules photovoltaïques sur chaque face de chaque module de collecte présente un rendement significativement supérieur. Cela illustre parfaitement le phénomène dit de « jeu de miroir » permettant de collecter de l'énergie solaire au niveau de chaque face des modules de collecte, et cela tout en permettant un passage de la lumière solaire au travers du système de collecte.

Il est à noter que pour l'obtention des résultats illustrés sur cette figure 7, le film sélectif présentait un coefficient de réflexion de 45%, et que le système de collecte était exposé face au Sud.

Il a été également constaté une exposition des zones de conversion aux rayons solaires réfléchis de 18% sur l'année.

Toutes ces données montrent que l'invention procure un rendement de 10% à 11% supérieur à celui d'un système de collecte ne présentant pas de zone de réflexion.

Ainsi, comme cela apparaît clairement au vu de la description qui précède, via un « jeu de miroir » couplé à des cellules photovoltaïques disposées sur chacune des faces des modules de collecte, la présente invention permet d'améliorer la production d'électricité par phénomène photovoltaïque , tout en permettant la transmission régulée d'une partie des rayons solaires incidents au travers du système de collecte.

La présente invention offre donc une solution particulièrement efficace pour améliorer l'efficacité énergétique des bâtiments.

Comme mentionné ci-dessus, le système selon la présente invention peut être disposé au niveau d'éléments vitrés d'un bâtiment afin par exemple d'une part de collecter de l'énergie solaire et d'autre part de réguler le flux lumineux traversant lesdits éléments vitrés. Cette régulation du flux lumineux permet ainsi de réguler la température des pièces ou encore leur éclairement. L'invention permet notamment de réduire la quantité d'énergie nécessaire au refroidissement des intérieurs de bâtiments durant l'été, le printemps et l'automne.

Selon un autre exemple concret d'application, le système selon la présente invention peut être disposé au-dessus d'un champ de culture de certaines plantes ou organismes, comme le basilic ou des micros algues par exemple, qui ne demandent pas une forte exposition au soleil. En effet via la gestion du flux lumineux traversant le système de collecte selon la présente invention, les plantes reçoivent une quantité de rayons solaires adaptée à leurs besoins et cela tout en permettant la collecte d'énergie solaire. Cela permet également de cultiver certaines plantes dans des régions où un ensoleillement direct, trop important, ne le permettrait pas.

L'invention n'est pas limitée aux modes de réalisations précédemment décrits et s'étend à tous les modes de réalisation couverts par les revendications.

### REFERENCES

- 100.: Module de collecte
110. Première face
111. Première zone de conversion
112. Première zone de réflexion
113. Premier élément transparent
114. Premier film sélectif
115 Première pluralité de cellules photovoltaïques
120. Deuxième face
121. Deuxième zone de conversion
122. Deuxième zone de réflexion
123. Deuxième élément transparent
124. Deuxième film sélectif
125 Deuxième pluralité de cellules photovoltaïques
130. Structure de support
131. Axe de rotation
140. Pluralité de cellules photovoltaïques bifaciales
150. Dispositif de couplage
160. Dispositif de pilotage
161. Module de réception
- 100a.: Premier module de collecte
110a. Première face du premier module de collecte
120a. Deuxième face du premier module de collecte
- 100b.: Deuxième module de collecte
110b. Première face du deuxième module de collecte
120b. Deuxième face du deuxième module de collecte
- 100c.: Troisième module de collecte
110b. Première face du troisième module de collecte
120b. Deuxième face du troisième module de collecte
- 200.: Soleil 200
210. Rayons solaires incidents
211. Angle entre les rayons solaires incidents et l'une parmi la première et la deuxième face d'un module de collecte
212. Angle entre l'une parmi la première et la deuxième face d'un module de collecte et la surface de l'élément portant le système de collecte.
212a. angle possible de décalage de deux modules de collecte adjacent adjacents
212b. angle formé entre une ligne passant par le centre géométrique des zones de réflexion de deux modules de collectes adjacents et une ligne passant par le centre géométrique d'une zone de réflexion d'un module de collecte donné et par le centre géométrique d'une zone de conversion d'un module de collecte adjacent
213. Rayons solaires réfléchis décalés
220. Rayons solaires réfléchis
220a. Rayons solaires réfléchis par le premier module de collecte
220b. Rayons solaires réfléchis par le deuxième module de collecte
220c. Rayons solaires réfléchis par le troisième module de collecte
230. Rayons solaires transmis
230a. Rayons solaires transmis par le premier module de collecte
230b. Rayons solaires transmis par le deuxième module de collecte
230c. Rayons solaires transmis par le troisième module de collecte
240. Distance entre le centre géométrique d'une zone de conversion et le centre géométrique d'une zone de réflexion d'un même module de collecte
241a. Centre géométrique d'une zone de conversion du premier module de collecte
241b. Centre géométrique d'une zone de conversion du deuxième module de collecte
250. Distance entre le centre géométrique d'une zone de réflexion du premier module de collecte et le centre de réflexion du deuxième module de collecte
251a. Centre géométrique d'une zone de réflexion du premier module de collecte
251b. Centre géométrique d'une zone de réflexion du deuxième module de collecte
- 300.: Fenêtre
310. Élément vitré
320. Partie extérieure
330. Partie intérieure
- 400.: Bâtiment

## Revendications

1. Système de collecte d'énergie solaire comprenant une pluralité de modules de collecte (100a-100c), chaque module de collecte (100a-100c) comprenant au moins une première face (110a-110c) et une deuxième face (120a-120c), opposée à la première face (110a-110c), **caractérisé en ce que** chacune des première (110a-110c) et deuxième (120a-120c) faces comprend :
• au moins une zone de conversion (111, 121) comprenant une pluralité de cellules photovoltaïques (115, 125) et
• au moins une zone de réflexion (112, 122) configurée pour réfléchir une partie des rayons solaires incidents;
**en ce que** , la zone de réflexion (112) de la première face (110) et la zone de réflexion (122) de la deuxième face (120) comprennent au moins un film sélectif (114, 124) présentant une transmittance et une réflectance sélectives relativement aux rayons solaires incidents (210) de sorte à réfléchir entre 10% et 85% des rayons solaires incidents (210), la zone de réflexion (112) de la première face (110) et la zone de réflexion (122) de la deuxième face (120) étant ainsi configurées pour être traversées par une partie des rayons solaires incidents (210),
et **en ce que** le système comprend au moins un dispositif de couplage (150) configuré pour piloter la position des modules de collecte (100a-100c) de sorte que:
• dans une première position relative des modules de collecte (100a-100c) :
∘ des rayons solaires incidents (210) arrivant sur la zone de réflexion (112b) de la première face (110b) d'un module de collecte (100b) donné parmi la pluralité de modules de collecte (100a-100c):
▪ sont pour partie réfléchis (220b) en direction de la zone de conversion (121a) de la deuxième face (120a) d'un module de collecte (100a) adjacent audit module de collecte (100b) donné et
▪ traversent (230b) pour partie ledit module de collecte (100b) donné,
∘ des rayons solaires incidents (210) arrivent sur la zone de conversion (111b) de la première face (110b) dudit module de collecte (100b) donné, et
• dans une deuxième position des modules de collecte (100a-100c),
∘ des rayons solaires incidents (210) arrivant sur la zone de réflexion (122a) de la deuxième face (120a) dudit module de collecte (100a) adjacent sont pour partie réfléchis (220a) en direction de la zone de conversion (111b) de la première face (110b) dudit module de collecte (100b) donné,
∘ des rayons solaires incidents (210) arrivent sur la zone de conversion (121a) de la deuxième face (120a) dudit module de collecte (100a) adjacent.

2. Système selon la revendication précédente dans lequel chaque module de collecte (100a-100c) définit un plan médian sensiblement parallèle à la première face (110) et à la deuxième face (120) et dans lequel les modules de collecte (100a-100c) sont disposés les uns relativement aux autres de sorte à ce que leurs plans médians soient parallèles.

3. Système selon l'une quelconque des revendications précédentes dans lequel la zone de conversion (111) de la première face (110) et la zone de conversion (121) de la deuxième face (120) sont comprises entre un premier élément transparent (113) et un deuxième élément transparent (123).

4. Système selon l'une quelconque des revendications précédentes dans lequel une pluralité de cellules photovoltaïques bifaciales (140) forme à la fois la zone de conversion (111) de la première face (110) et à la fois la zone de conversion (121) de la deuxième face (120) d'au moins un module parmi la pluralité de modules de collecte (100a-100c).

5. Système selon l'une quelconque des revendications 1 à 3 dans lequel la zone de conversion (111) de la première face (110) et la zone de conversion (121) de la deuxième face (120) sont disposées à distance l'une de l'autre et de part et d'autre du plan médian de chaque module de collecte (100).

6. Système selon la revendication précédente dans lequel la zone de réflexion (112) de la première face (110) et la zone de réflexion (122) de la deuxième face (120) sont disposées en regard l'une de l'autre et de part et d'autre du plan médian de chaque module de collecte (100).

7. Système selon l'une quelconque des revendications précédentes dans lequel l'au moins un film sélectif (114, 124) présente une transmittance et une réflectance sélectives relativement aux rayons solaires incidents (210) de sorte à réfléchir entre 15% et 50%, et de préférence entre 20% et 35%, des rayons solaires incidents (210),.

8. Système selon l'une quelconque des revendications précédentes dans lequel le dispositif de couplage (150) comprend au moins une structure de support (130), chaque module de collecte (100a-100c) étant monté en rotation sur ladite structure de support (130) autour d'un axe de rotation (131), les axes de rotation des modules de collecte (100a-100c) étant parallèles entre eux.

9. Système selon l'une quelconque des revendications précédentes dans lequel le dispositif de couplage (150) est configuré pour piloter la position des modules de collecte (100a-100c) de manière à ce que les rayons solaires incidents (210) forment avec l'une parmi la première face (110) et la deuxième face (120) de chaque module de collecte (100a-100c) un angle d'incidence obtus.

10. Système selon l'une quelconque des revendications précédentes dans lequel le dispositif de couplage (150) comprend au moins un dispositif de pilotage (160) configuré pour ajuster au cours du temps la position des modules de collecte (100a-100c) les uns par rapport aux autres, en fonction d'au moins l'un des paramètres suivants :
∘ la date et l'heure,
∘ une température à l'intérieur d'une infrastructure, telle que bâtiment (400), sur laquelle le système de collecte est fixé,
∘ une température extérieure,
∘ une intensité lumineuse extérieure, de préférence reçue par le système de collecte ou à proximité du système de collecte,
∘ une intensité lumineuse à l'intérieure d'une infrastructure telle qu'un bâtiment (400), sur laquelle le système de collecte est fixé,
∘ l'inclinaison des rayons solaires incidents (210) par rapport au système de collecte,
∘ un paramètre météorologique pris parmi : la vitesse du vent, la direction du vent, la présence de pluie,
∘ une orientation géographique du système de collecte,
∘ une inclinaison du système de collecte relativement à l'horizon.

11. Système selon l'une quelconque des revendications précédentes dans lequel le dispositif de couplage (150) comprend au moins un dispositif de pilotage (160) configuré pour ajuster la position des modules de collecte (100a-100c) les uns par rapport aux autres, en fonction d'au moins un paramètre pris parmi :
∘ une intensité lumineuse extérieure, de préférence reçue par le système de collecte ou à proximité du système de collecte,
∘ une intensité lumineuse à l'intérieure d'une infrastructure telle qu'un bâtiment (400), sur laquelle le système de collecte est fixé,
∘ l'inclinaison des rayons solaires incidents par rapport au système de collecte.

12. Système selon l'une quelconque des deux revendications précédentes dans le dispositif de pilotage (160) est couplé à un capteur captant ledit au moins un paramètre et/ou dans lequel le dispositif de pilotage (160) comprend au moins un module de réception (161) d'au moins un paramètre variable dans le temps de sorte à ce que l'ajustement de l'orientation des modules de collecte (100a-100c) soit fonction au moins dudit paramètre variable dans le temps.

13. Ensemble comprenant au moins un système de collecte d'énergie solaire selon l'une quelconque des revendications précédentes et comprenant au moins un élément d'une infrastructure, l'élément étant pris parmi : une paroi vitrée (310), un toit, un abri, et dans lequel système de collecte est disposé sur ou en regard de l'élément de l'infrastructure.

14. Bâtiment (400) comprenant au moins un système de collecte d'énergie solaire selon l'une quelconque des revendications 1 à 12 et comprenant au moins une paroi vitrée (310), le système de collecte étant disposé sur ou en regard de la paroi vitrée (310).

15. Procédé de pilotage d'un système de collecte selon l'une quelconque des revendications 1 à 12 et comprenant la séquence d'étapes comprenant au moins les étapes suivantes :
a. Recevoir au moins un paramètre variable dans le temps comprenant au moins un paramètre pris parmi :
∘ la date et l'heure,
∘ une température à l'intérieur d'une infrastructure, telle que bâtiment (400), sur laquelle le système de collecte est fixé,
∘ une température extérieure,
∘ une intensité lumineuse extérieure, de préférence reçue par le système de collecte ou à proximité du système de collecte,
∘ une intensité lumineuse à l'intérieure d'une infrastructure telle qu'un bâtiment (400), sur laquelle le système de collecte est fixé,
∘ l'inclinaison des rayons solaires incidents par rapport au système de collecte,
∘ un éblouissement à l'intérieur d'une infrastructure telle qu'un bâtiment, sur laquelle le système de collecte est fixé,
∘ un paramètre météorologique pris parmi : la vitesse du vent, la direction du vent, la présence de pluie,
∘ une orientation géographique du système de collecte,
∘ une inclinaison du système de collecte relativement à l'horizon ;
b. Ajuster l'orientation des modules de collecte (100a-100c) en fonction au moins dudit paramètre, l'orientation des modules de collecte (100a-100c) étant ajustée en fonction au moins dudit paramètre et d'une consigne prioritaire, la consigne prioritaire étant basée sur au moins l'un parmi: une énergie électrique produite par les zones de conversion (111, 121), une température à l'intérieur d'une infrastructure sur laquelle est disposée le système de collecte, un flux lumineux traversant le système de collecte ;
la séquence d'étapes a et b étant répétée dans le temps.

## Patentansprüche

1. System zum Sammeln von Sonnenenergie, das eine Vielzahl von Sammelmodulen (100a-100c) umfasst, wobei jedes Sammelmodul (100a-100c) mindestens eine erste Seite (110a-110c) und eine zweite Seite (120a-120c) umfasst, die der ersten Seite (110a-110c) gegenüberliegt, **dadurch gekennzeichnet, dass** jede aus der ersten (110a-110c) und zweiten (120a-120c) Seite umfasst:
- mindestens einen Umwandlungsbereich (111, 121), der eine Vielzahl von Photovoltaikzellen (115, 125) umfasst, und
- mindestens einen Reflexionsbereich (112, 122), der dafür konfiguriert ist, einen Teil der einfallenden Sonnenstrahlen zu reflektieren;
dadurch, dass der Reflexionsbereich (112) der ersten Seite (110) und der Reflexionsbereich (122) der zweiten Seite (120) mindestens einen selektiven Film (114, 124) umfassen, der in Bezug auf die einfallenden Sonnenstrahlen (210) ein selektives Transmissionsvermögen und ein selektives Reflexionsvermögen aufweist, um zwischen 10 % und 85 % der einfallenden Sonnenstrahlen (210) zu reflektieren, wobei der Reflexionsbereich (112) der ersten Seite (110) und der Reflexionsbereich (122) der zweiten Seite (120) damit so konfiguriert sind, dass ein Teil der einfallenden Sonnenstrahlen (210) durch sie hindurchgeht,
und dadurch, dass das System mindestens eine Kopplungsvorrichtung (150) umfasst, die dafür konfiguriert ist, die Stellung der Sammelmodule (100a-100c) so zu steuern, dass:
• bei einer ersten relativen Stellung der Sammelmodule (100a-100c):
o einfallende Sonnenstrahlen (210), die auf den Reflexionsbereich (112b) der ersten Seite (110b) eines gegebenen Sammelmoduls (110b) aus der Vielzahl von Sammelmodulen (100a-100c) auftreffen:
▪ zum Teil in Richtung des Umwandlungsbereichs (121a) der zweiten Seite (120a) eines an das gegebene Sammelmodul (100b) angrenzenden Sammelmoduls (100a) reflektiert (220b) werden, und
▪ zum Teil durch das gegebenen Sammelmodul (100b) hindurchgehen (230b),
∘ einfallende Sonnenstrahlen (210) auf den Umwandlungsbereich (111b) der ersten Seite (110b) des gegebenen Sammelmoduls (100b) auftreffen, und
• bei einer zweiten Stellung der Sammelmodule (100a-100c)
∘ einfallende Sonnenstrahlen (210), die auf den Reflexionsbereich (122a) der zweiten Seite (120a) des angrenzenden Sammelmoduls (100a) auftreffen, zum Teil in Richtung des Umwandlungsbereichs (111b) der ersten Seite (110b) des gegebenen Sammelmoduls (100b) reflektiert (220a) werden,
∘ einfallende Sonnenstrahlen (210) auf den Umwandlungsbereich (121a) der zweiten Seite (120a) des angrenzenden Sammelmoduls (100a) auftreffen.

2. System nach dem vorstehenden Anspruch, wobei jedes Sammelmodul (100a-100c) eine Mittelebene definiert, die im Wesentlichen zur ersten Seite (110) und zur zweiten Seite (120) parallel ist, und wobei die Sammelmodule (100a-100c) in Bezug zueinander so angeordnet sind, dass ihre Mittelebenen parallel sind.

3. System nach einem der vorstehenden Ansprüche, wobei der Umwandlungsbereich (111) der ersten Seite (110) und der Umwandlungsbereich (121) der zweiten Seite (120) zwischen einem ersten transparenten Element (113) und einem zweiten transparenten Element (123) liegen.

4. System nach einem der vorstehenden Ansprüche, wobei eine Vielzahl von zweiseitigen Photovoltaikzellen (140) zugleich den Umwandlungsbereich (111) der ersten Seite (110) und zugleich den Umwandlungsbereich (121) der zweiten Seite (120) von mindestens einem Modul aus der Vielzahl von Sammelmodulen (100a-100c) bildet.

5. System nach einem der Ansprüche 1 bis 3, wobei der Umwandlungsbereich (111) der ersten Seite (110) und der Umwandlungsbereich (121) der zweiten Seite (120) in Abstand zueinander und beidseits der Mittelebene jedes Sammelmoduls (100) angeordnet sind.

6. System nach dem vorstehenden Anspruch, wobei der Reflexionsbereich (112) der ersten Seite (110) und der Reflexionsbereich (122) der zweiten Seite (120) einander zugewandt und beidseits der Mittelebene jedes Sammelmoduls (100) angeordnet sind.

7. System nach einem der vorstehenden Ansprüche, wobei der mindestens eine selektive Film (114, 124) in Bezug auf die einfallenden Sonnenstrahlen (210) ein selektives Transmissionsvermögen und ein selektives Reflexionsvermögen aufweist, um zwischen 15 % und 50 %, und vorzugsweise zwischen 20 % und 35 % der einfallenden Sonnenstrahlen (210) zu reflektieren.

8. System nach einem der vorstehenden Ansprüche, wobei die Kopplungsvorrichtung (150) mindestens eine Tragstruktur (130) umfasst, wobei jedes Sammelmodul (100a-100c) um eine Drehachse (131) drehend an der Tragstruktur (130) angebracht ist, wobei die Drehachsen der Sammelmodule (100a-100c) zueinander parallel sind.

9. System nach einem der vorstehenden Ansprüche, wobei die Kopplungsvorrichtung (150) dafür konfiguriert ist, die Stellung der Sammelmodule (100a-100c) so zu steuern, dass die einfallenden Sonnenstrahlen (210) mit einer aus der ersten Seite (110) und der zweiten Seite (120) jedes Sammelmoduls (100a-100c) einen stumpfen Einfallswinkel bilden.

10. System nach einem der vorstehenden Ansprüche, wobei die Kopplungsvorrichtung (150) mindestens eine Steuervorrichtung (160) umfasst, die dafür konfiguriert ist, die Stellung der Sammelmodule (100a-100c) zueinander im Verlauf der Zeit in Abhängigkeit von mindestens einem der folgenden Parameter anzupassen:
∘ dem Datum und der Uhrzeit,
∘ einer Temperatur im Inneren einer Infrastruktur, wie etwa einem Gebäude (400), an dem das Sammelsystem befestigt ist,
∘ einer Außentemperatur,
∘ einer Außenlichtintensität, die vorzugsweise vom Sammelsystem oder in der Nähe des Sammelsystems empfangen wird,
∘ einer Lichtintensität im Inneren einer Infrastruktur, wie etwa einem Gebäude (400), an dem das Sammelsystem befestigt ist,
∘ der Neigung der einfallenden Sonnenstrahlen (210) in Bezug auf das Sammelsystem,
∘ einem meteorologischen Parameter, ausgewählt aus: der Windgeschwindigkeit, der Windrichtung, dem Vorliegen von Regen,
∘ einer geographischen Ausrichtung des Sammelsystems,
∘ einer Neigung des Sammelsystems in Bezug auf den Horizont.

11. System nach einem der vorstehenden Ansprüche, wobei die Kopplungsvorrichtung (150) mindestens eine Steuervorrichtung (160) umfasst, die dafür konfiguriert ist, die Stellung der Sammelmodule (100a-100c) zueinander in Abhängigkeit von mindestens einem Parameter anzupassen, ausgewählt aus:
∘ einer Außenlichtintensität, die vorzugsweise vom Sammelsystem oder in der Nähe des Sammelsystems empfangen wird,
∘ einer Lichtintensität im Inneren einer Infrastruktur, wie etwa einem Gebäude (400), an dem das Sammelsystem befestigt ist,
∘ der Neigung der einfallenden Sonnenstrahlen in Bezug auf das Sammelsystem.

12. System nach einem der zwei vorstehenden Ansprüche, wobei die Steuervorrichtung (160) mit einem Sensor gekoppelt ist, der den mindestens einen Parameter erfasst, und/oder wobei die Steuervorrichtung (160) mindestens ein Modul zum Empfangen (161) von mindestens einem zeitveränderlichen Parameter umfasst, sodass das Anpassen der Ausrichtung der Sammelmodule (100a-100c) mindestens von dem zeitveränderlichen Parameter abhängig ist.

13. Baugruppe, die mindestens ein System zum Sammeln von Sonnenenergie nach einem der vorstehenden Ansprüche umfasst, und mindestens ein Element einer Infrastruktur umfasst, wobei das Element ausgewählt ist aus: einer Glaswand (310), einem Dach, einer Überdachung, und wobei das Sammelsystem an dem Element der Infrastruktur oder demselben zugewandt angeordnet ist.

14. Gebäude (400), das mindestens ein System zum Sammeln von Sonnenenergie nach einem der Ansprüche 1 bis 12 umfasst, und mindestens eine Glaswand (310) umfasst, wobei das Sammelsystem an der Glaswand (310) oder derselben zugewandt angeordnet ist.

15. Verfahren zum Steuern eines Sammelsystems nach einem der Ansprüche 1 bis 12, und die Schrittfolge umfassend, die mindestens die folgenden Schritte umfasst:
a. Empfangen von mindestens einem zeitveränderlichen Parameter, der mindestens einen Parameter umfasst, ausgewählt aus:
∘ dem Datum und der Uhrzeit,
∘ einer Temperatur im Inneren einer Infrastruktur, wie etwa einem Gebäude (400), an dem das Sammelsystem befestigt ist,
∘ einer Außentemperatur,
∘ einer Außenlichtintensität, die vorzugsweise vom Sammelsystem oder in der Nähe des Sammelsystems empfangen wird,
∘ einer Lichtintensität im Inneren einer Infrastruktur, wie etwa einem Gebäude (400), an dem das Sammelsystem befestigt ist,
∘ der Neigung der einfallenden Sonnenstrahlen in Bezug auf das Sammelsystem,
∘ einer Blendung im Inneren einer Infrastruktur, wie etwa einem Gebäude, an dem das Sammelsystem befestigt ist,
∘ einem meteorologischen Parameter, ausgewählt aus: der Windgeschwindigkeit, der Windrichtung, dem Vorliegen von Regen,
∘ einer geographischen Ausrichtung des Sammelsystems,
∘ einer Neigung des Sammelsystems in Bezug auf den Horizont;
b. Anpassen der Ausrichtung der Sammelmodule (100a-100c) in Abhängigkeit von mindestens dem Parameter, wobei die Ausrichtung der Sammelmodule (100a-100c) in Abhängigkeit von mindestens dem Parameter und einem prioritären Sollwert angepasst wird, wobei der prioritäre Sollwert auf mindestens einem basiert aus: einer elektrischen Energie, die von den Umwandlungsbereichen (111, 121) erzeugt wird, einer Temperatur im Inneren einer Infrastruktur, an der das Sammelsystem angeordnet ist, einem Lichtstrom, der durch das Sammelsystem hindurchgeht;
wobei die Schrittfolge a und b über die Zeit hinweg wiederholt wird.

## Claims

1. System for collecting solar energy, comprising a plurality of collection modules (100a-100c), each collection module (100a-100c) comprising at least one first face (110a-110c) and a second face (120a-120c), opposite to the first face (110a-110c), **characterised in that** each of the first (110a-110c) and second (120a-120c) faces comprises:
• at least one conversion zone (111, 121) comprising a plurality of photovoltaic cells (115, 125), and
• at least one reflection zone (112, 122) configured to reflect some of the incident solar rays;
**in that** the reflection zone (112) of the first face (110) and the reflection zone (122) of the second face (120) comprise at least one selective film (114, 124) having selective transmittance and reflectance in relation to the incident solar rays (210) so as to reflect between 10% and 85% of the incident solar rays (210), the reflection zone (112) of the first face (110) and the reflection zone (122) of the second face (120) thus being configured so as to have some of the incident solar rays (210) pass through them,
and **in that** the system comprises at least one coupling device (150) configured to control the position of the collection modules (110a-110c) so that:
• in a first relative position of the collection modules (100a-100c):
∘ incident solar rays (210) arriving on the reflection zone (112b) of the first face (110b) of a given collection module (100b) among the plurality of collection modules (100a-100c):
▪ are partly reflected (220b) in the direction of the conversion zone (121a) of the second face (120a) of a collection module (100a) adjacent to said given collection module (100b), and
▪ partly pass through (230b) said given collection module (100b),
∘ incident solar rays (210) arrive on the conversion zone (111b) of the first face (110b) of said given collection module (100b), and
• in a second position of the collection modules (100a-100c),
∘ incident solar rays (210) arriving on the reflection zone (122a) of the second face (120a) of said adjacent collection module (100a) are partly reflected (220a) in the direction of the conversion zone (111b) of the first face (110b) of said given collection module (100b),
∘ incident solar rays (210) arrive on the conversion zone (121a) of the second face (120a) of said adjacent collection module (100a).

2. System according to the preceding claim, wherein each collection module (100a-100c) defines a mid-plane substantially parallel to the first face (110) and to the second face (120), and wherein the collection modules (100a-100c) are disposed in relation to one another so that the mid-planes thereof are parallel.

3. System according to either of the preceding claims, wherein the conversion zone (111) of the first face (110) and the conversion zone (121) of the second face (120) lie between a first transparent element (113) and a second transparent element (123).

4. System according to any of the preceding claims, wherein a plurality of dual-face photovoltaic cells (140) form both the conversion zone (111) of the first face (110) and at the same time the conversion zone (121) of the second face (120) of at least one module from among the plurality of collection modules (100a-100c).

5. System according to any of claims 1 to 3, wherein the conversion zone (111) of the first face (110) and the conversion zone (121) of the second face (120) are disposed at a distance from one another and on either side of the mid-plane of each collection module (100).

6. System according to the preceding claim, wherein the reflection zone (112) of the first face (110) and the reflection zone (122) of the second face (120) are disposed facing one another and on either side of the mid-plane of each collection module (100).

7. System according to any of the preceding claims, wherein the at least one selective film (114, 124) has selective transmittance and reflectance in relation to the incident solar rays (210) so as to reflect between 15% and 50%, and preferably between 20% and 35%, of the incident solar rays (210).

8. System according to any of the preceding claims, wherein the coupling device (150) comprises at least one support structure (130), each collection module (100a-100c) being mounted for rotation on said support structure (130) about a rotation axis (131), the rotation axes of the collection modules (100a-100c) being parallel to each other.

9. System according to any of the preceding claims, wherein the coupling device (150) is configured to control the position of the collection modules (100a-100c) so that the incident solar rays (210) form, with one from among the first face (110) and the second face (120) of each collection module (100a-100c), an obtuse angle of incidence.

10. System according to any of the preceding claims, wherein the coupling device (150) comprises at least one control device (160) configured to adjust over time the position of the collection modules (100a-100c) with respect to each other, according to at least one of the following parameters:
∘ the date and time,
∘ a temperature inside an infrastructure, such as a building (400), on which the collection system is fixed,
∘ an external temperature,
∘ an external light intensity, preferably received by the collection system or in the vicinity of the collection system,
∘ a light intensity inside an infrastructure such as a building (400), on which the collection system is fixed,
∘ the inclination of the incident solar rays (210) with respect to the collection system,
∘ a meteorological parameter taken from among: the wind speed, the wind direction, the presence of rain,
∘ a geographical orientation of the collection system,
∘ an inclination of the collection system in relation to the horizon.

11. System according to any of the preceding claims, wherein the coupling device (150) comprises at least one control device (160) configured to adjust the position of the collection modules (100a-100c) with respect to each other, according to at least one parameter taken from among:
∘ an external light intensity, preferably received by the collection system or in the vicinity of the collection system,
∘ a light intensity inside an infrastructure such as a building (400), on which the collection system is fixed,
∘ the inclination of the incident solar rays with respect to the collection system.

12. System according to either of the preceding two claims, wherein the control device (160) is coupled to a sensor capturing said at least one parameter and/or wherein the control device (160) comprises at least one module (161) for receiving at least one parameter variable over time so that the adjustment of the orientation of the collection modules (100a-100c) is dependent at least on said parameter variable over time.

13. Assembly comprising at least one solar-energy collection system according to any of the preceding claims and comprising at least one element of an infrastructure, the element being taken from among: a glazed wall (310), a roof and a shelter, and wherein said collection system is disposed on or opposite the element of the infrastructure.

14. Building (400) comprising at least one solar-energy collection system according to any of claims 1 to 12 and comprising at least one glazed wall (310), the collection system being disposed on or opposite the glazed wall (310).

15. Method for controlling a collection system according to any of claims 1 to 12 and comprising the sequence of steps comprising at least the following steps:
a. receiving at least one parameter variable over time comprising at least one parameter taken from among:
∘ the date and time,
∘ a temperature inside an infrastructure, such as a building (400), on which the collection system is fixed,
∘ an external temperature,
∘ an external light intensity, preferably received by the collection system or in the vicinity of the collection system,
∘ a light intensity inside an infrastructure such as a building (400), on which the collection system is fixed,
∘ the inclination of the incident solar rays (210) with respect to the collection system,
∘ a dazzling inside an infrastructure such as a building, on which the collection system is fixed,
∘ a meteorological parameter taken from among: the wind speed, the wind direction, the presence of rain,
∘ a geographical orientation of the collection system,
∘ an inclination of the collection system in relation to the horizon;
b. adjusting the orientation of the collection modules (100a-100c) according to at least said parameter, the orientation of the collection modules (100a-100c) being adjusted according to at least said parameter and a priority recorded value, the priority recorded value being based on at least one from among: an electrical energy produced by the conversion zones (111, 121), a temperature inside an infrastructure on which the collection system is disposed, a light flow passing through the collection system;
the sequence of steps a and b being repeated over time.
